# EUROPEAN PATENT APPLICATION

(11) **EP 2 897 087 A1**
(43) Date of publication of application: **22.07.2015**
(21) Application number: 15151948.5
(22) Date of filing: 21.01.2015
(51) Int. Cl.: G06Q 10/00

(54) **Method for associating schedule information of electronic diary with mind map, server for providing program for performing the same, and computer-readable recording medium having the program recorded therein**

(30) Priority: 21.01.2014 KR 20140007209
(71) Applicant: Chung, Young Gyo, Seoul 100-753 (KR)
(72) Inventor: Chung, Young Gyo, Seoul 100-753 (KR)
(74) Representative: Delumeau, François Guy

(57) **Abstract**

Disclosed herein are a method for associating schedule information of an electronic diary with a mind map, a server for providing a program for performing the same, and a computer-readable recording medium having the program recorded therein. The method for associating schedule information of an electronic diary with a mind map performed by an electronic diary device, including: (a) a step of providing an electronic diary interface displaying the schedule information; and (b) a step of associating the schedule information with the mind map in the case in which association between the schedule information displayed on the electronic diary interface and the mind map is requested.

## Description

### BACKGROUND

### FIELD

The present invention relates to a method for associating schedule information of an electronic diary with a mind map, a server for providing a program for performing the same, and a computer-readable recording medium having the program recorded therein, and more particularly, to a method for associating schedule information of an electronic diary with a mind map capable of creating and maintaining the mind map associated with the electronic diary based on the schedule information of the electronic diary, a server for providing a program for performing the same, and a computer-readable recording medium having the program recorded therein.

### DISCUSSION OF THE BACKGROUND

A portable diary has been widely used in order to systematically manage a schedule and directly take notes of an occurring idea. Generally, this diary has been offline manufactured, sold, and used as a tangible diary product itself. Meanwhile, due to the development of an information communication technology, a mobile terminal such as a notebook computer, a laptop computer, a palmtop computer, a personal digital assistant (PDA), a smart phone, or the like, has been widely spread. Therefore, an electronic diary device configured by installing an electronic diary application on the mobile terminal has been generally used. Particularly, in the case of using the electronic diary device, additional functions, for example, functions such as a schedule information search function, and the like, may be used as compared with a tangible offline diary, such that diary users have gradually tended to prefer using the electronic diary instead of the tangible offline diary. However, diaries that are currently used perform only a function of simply displaying input schedule information, and may not perform a function of meaningfully structuralizing or meaningfully data-mining the schedule information, regardless of whether they are the offline diary or the electronic diary. That is, even though some of the schedule information on the electronic diary has a predetermined relationship, the schedule information is provided as only itself and is not provided in a state in which it is structuralized or systematized. Therefore, a user should individually search the schedule information having the relationship and should make a separate effort to find the relationship.

Meanwhile, as a method for visually structuralizing fragmented information, a method for structuralizing information by creating a mind map has been widely used. The mind map is a new method for learning and memorization, which was developed by an Englishman Tony Buzan in the early 1970s. The mind map, which has the meaning of a 'map of thoughts', is a brain developing method/brain using method for improving thinking power, creativity, and memory by allowing thoughts of a person having multidimensional characteristics without a sequence to branch from a center image at the center of the paper to radially spread the thoughts using a core word, an image, a color, a sign, a symbol, and the like. A 'Different Functions of Left and Right Brains of Human Being' found by Professor Roger Sperry's team around the same time was a good foundation supporting the mind map theory by Tony Buzan.

Professor Roger Sperry's team published a study result of a cerebral cortex (cortex outer cell, that is, integument) of a brain in the late 1960s. The study on the left and right brains by Roger Sperry has laid an epochal foundation for studying the brain. After that, Ornstein, Seidel, Bloch, and the like, who are successors to Roger Sperry, have developed and complemented the study by Roger Sperry. Although each of both hemispheres dominates any specific region and activity of the brain, both hemispheres basically manage all regions of the brain. A mental technology bisected by Roger Sperry has been uniformly distributed throughout the cerebral cortex in fact. Michael Bloch has disclosed in his paper `Tel/Syn' that 'when we define that ourselves are a person of a right brain or a person of a left brain, it limits capability of ourselves to develop new capability'.

The mind map is configured as a method in which the brain conveniently accepts and outputs information. The number of preparation materials for creating the mind map is not many. Everyone may easily create the mind map using only A4 or A3 paper, three or four color pens, and three or four highlighters. The mind map may be created by only drawing thoughts on paper by an appropriate method using the left brain having a logic and vocabulary ability as a main function and the right brain having a color and a form as a main function. Many people are significantly benefiting from the mind map at office, school, or home.

According to the related art, the paper and the pens have been required in order to use the mind map, the mind map created by this method should be separately arranged and stored, and it was impossible to add or delete thoughts. In order to solve these problems, a technology capable of more conveniently creating and reading the mind map by creating the mind map using a personal information communication device such as a desktop computer, a notebook computer, a smart phone, or the like, and storing the created mind map in the personal information communication device has been developed and used.

As described above, the mind map may become a powerful tool in visually structuralizing the fragmented information. Therefore, in the case of creating and providing the mind map using the schedule information having the predetermined relationship among the schedule information on the electronic diary as describe above, the schedule information may be more systematically and structurally confirmed and managed. However, an existing electronic diary has not provided this function.

### BRIEF SUMMARY OF THE INVENTION

Objects of the present invention are to solve the problems of the related art described above.

An object of the present invention is to provide a method for associating schedule information of an electronic diary with a mind map capable of creating and maintaining the mind map associated with the electronic diary based on the schedule information of the electronic diary, a server for providing a program for performing the same, and a computer-readable recording medium having the program recorded therein.

Another aspect of the present invention is to provide a method for associating schedule information of an electronic diary with a mind map capable of automatically reflecting a created or changed content in the electronic diary in the case in which a content in the mind map associated with the electronic diary is created or changed, a server for providing a program for performing the same, and a computer-readable recording medium having the program recorded therein.

Still another aspect of the present invention is to provide a method for associating schedule information of an electronic diary with a mind map capable of changing a display mode of the mind map based on date and hour information or memo information depending on a selection of a user on the mind map associated with the schedule information of the electronic diary, a server for providing a program for performing the same, and a computer-readable recording medium having the program recorded therein.

Characteristic configurations of the present invention for accomplishing the objects of the present invention as described above and unique effects of the present invention to be described will be described below.

According to an exemplary embodiment of the present invention, there is provided a method for associating schedule information of an electronic diary with a mind map performed by an electronic diary device, including: (a) a step of providing an electronic diary interface displaying the schedule information; and (b) a step of associating the schedule information with the mind map in the case in which association between the schedule information displayed on the electronic diary interface and the mind map is requested.

In the step (b), in the case in which creation of a new mind map with respect to the schedule information is requested, the new mind map having the schedule information as a center node may be created.

In the step (b), in the case in which association between the schedule information and an existing mind map is requested, the schedule information may be added to a specific node of the existing mind map.

The schedule information may include date and hour information and memo information.

In the step (b), the schedule information may be added as a first level schedule information node to the existing mind map.

In the step (b), the date and hour information may be added as a first level date and hour information node to the existing mind map, and the memo information may be added as a second level memo information node having the first level date and hour information node as a parent node to the existing mind map.

In the step (b), in the case in which the first level date and hour information node having the same content as that of the date and hour information is already present in the existing mind map, the memo information may be added as a brother node of another second level memo information node having the first level date and hour information node as a parent node to the existing mind map.

The date and hour information may be divided in any one of an annual unit, a monthly unit, a weekly unit, a daily unit, and a hourly unit depending on setting to form the first level date and hour information node.

The schedule information may further include detailed information, and in the step (b), the detailed information may be added as a third level detailed information node having the second level memo information node as a parent node to the existing mind map.

In the step (b), the memo information may be added as a first level memo information node to the existing mind map, and the date and hour information may be added as a second level date and hour information node having the first level memo information node as a parent node to the existing mind map.

In the step (b), in the case in which the first level memo information node having the same content as that of the memo information is already present in the existing mind map, the date and hour information may be added as a brother node of another second level date and hour information node having the first level memo information node as a parent node to the existing mind map.

The schedule information may further include detailed information, and in the step (b), the detailed information may be added as a third level detailed information node having the second level date and hour information node as a parent node to the existing mind map.

In the step (b), in the case in which a plurality of existing mind maps are present, information on the plurality of existing mind maps may be output, and the schedule information may be added to a specific existing mind map selected depending on a selection of a user.

In the step (b), in the case in which the schedule information is related to a specific mind map, a mind map icon corresponding to the specific mind map may be added to the schedule information and be displayed on the electronic diary interface.

The method for associating schedule information of an electronic diary with a mind map may further include (c) a step of outputting a specific mind map related to the schedule information on a mind map interface; and (d) a step of changing the schedule information related to a changed content and displaying the changed schedule information on the electronic diary interface, in the case in which a content of the specific mind map is changed through the mind map interface depending on a manipulation of a user.

The step (c) may include a step of changing a set date and hour information dividing unit depending on a selection of the user and reconfiguring and outputting the specific mind map depending on the changed date and hour information dividing unit, in the case in which a first level node is set as a date and hour information node.

The step (c) may further include a step of changing a first level node into one of a date and hour information node and a memo information node depending on a manipulation of the user to reconfigure the mind map.

In the step (c), in the case in which association between a specific node that is not associated with the schedule information of the electronic diary among nodes on the specific mind map and the schedule information is requested depending on a manipulation of the user, a content of the specific node requested to be associated may be created and stored as the schedule information of the electronic diary.

In the step (c), in the case in which the specific node requested to be associated with the schedule information is a second level node, the specific node may inherit a content of a first level node, which is a parent node, and in the case in which the specific node requested to be associated with the schedule information is a third level node, the specific node may inherit a content of the first level node, which is a grandparent node, and a content of the second level node, which is a parent node.

In the step (c), in the case in which the specific node requested to be associated with the schedule information does not include date and hour information, a date and hour information input window through which the date and hour information is input may be provided, and the schedule information of the electronic diary may be created based on the date and hour information input through the date and hour information input window.

In the step (c), in the case in which a specific node associated with the schedule information on the specific mind map is deleted depending on a manipulation of the user, schedule information corresponding to the deleted specific node may be deleted.

In the step (c), in the case in which a content of a specific node associated with the schedule information on the specific mind map is changed depending on a manipulation of the user, schedule information corresponding to the changed specific node may be updated depending on the changed content.

In the step (c), in the case in which a position of a specific node associated with the schedule information on the specific mind map is changed depending on a manipulation of the user, schedule information corresponding to the changed specific node may be updated depending on the changed position of the specific node.

In the step (b), the schedule information may be added as an n+1-th level schedule information node having a preset n-th level specific node (n indicates a positive integer of 1 or more) as a parent node to the existing mind map.

According to another exemplary embodiment of the present invention, there is provided a computer-readable recording medium having a program for performing the method for associating schedule information of an electronic diary with a mind map as described above recorded therein.

According to still another exemplary embodiment of the present invention, there is provided a server for providing a program for performing the method for associating schedule information of an electronic diary with a mind map as described above to a user terminal.

### BRIEF DESCRIPTION OF THE DRAWINGS

FIG. 1 is a block diagram showing a configuration of an electronic diary device according to an exemplary embodiment of the present invention;
FIG. 2 is a flow chart showing a process of associating schedule information and a mind map with each other performed by the electronic diary device in the case in which association between the schedule information of the electronic diary and the mind map is newly requested according to an exemplary embodiment of the present invention;
FIG. 3 is a flow chart showing a process of associating schedule information and a mind map with each other performed by the electronic diary device in the case in which the schedule information of the electronic diary is changed according to an exemplary embodiment of the present invention;
FIG. 4 is a flow chart showing a process of associating schedule information and a mind map with each other performed by the electronic diary device in the case in which association between the schedule information and the mind map with respect to a specific node is newly requested according to an exemplary embodiment of the present invention;
FIG. 5 is a flow chart showing a process of associating schedule information and a mind map with each other performed by the electronic diary device in the case in which the mind map is changed according to an exemplary embodiment of the present invention;
FIG. 6 is an illustrative diagram of an electronic diary interface according to an exemplary embodiment of the present invention;
FIG. 7 is an illustrative diagram of a mind map configured using date and hour information as a first level node according to an exemplary embodiment of the present invention;
FIG. 8 is an illustrative diagram of a mind map configured using memo information as a first level node according to an exemplary embodiment of the present invention;
FIGS. 9A to 9I are illustrative diagrams of electronic diaries associated with the mind map actually implemented by the electronic diary device according to an exemplary embodiment of the present invention; and
FIG. 10 is a block diagram showing a configuration of a cooperation system using the electronic diary device according to an exemplary embodiment of the present invention.

### DETAILED DESCRIPTION OF THE ILLUSTRATED EMBODIMENTS

Exemplary embodiments of the present invention will be described in detail with reference to the accompanying drawings. These embodiments will be described in detail for those skilled in the art in order to practice the present invention. It should be appreciated that various exemplary embodiments of the present invention are different from each other, but do not have to be exclusive. For example, specific shapes, structures, and characteristics described in the present specification may be implemented in another exemplary embodiment without departing from the spirit and the scope of the present invention in connection with an exemplary embodiment. In addition, it should be understood that a position or an arrangement of individual components in each disclosed exemplary embodiment may be changed without departing from the spirit and the scope of the present invention. Therefore, a detailed description described below should not be construed as being restrictive. In addition, the scope of the present invention is defined only by the accompanying claims and their equivalents if appropriate. Similar reference numerals will be used to describe the same or similar functions throughout the accompanying drawings.

Hereinafter, exemplary embodiments of the present invention will be described in detail with reference to the accompanying drawings so that those skilled in the art may easily practice the present invention.

### [Exemplary Embodiment of the Present Invention]

In an exemplary embodiment of the present invention, a term 'mind map', which is a general term of information visually structuralized using nodes and branches, includes all information having characteristics of the mind map regardless of a display format thereof. In addition, in an exemplary embodiment of the present invention, it is to be understood that a mind map associated with schedule information may include various information as well as the corresponding schedule information. That is, in the case in which specific schedule information is associated with the mind map according to an exemplary embodiment of the present invention, it means that the corresponding schedule information is added as one of a plurality of nodes (that may be schedule information or may be general information rather than the schedule information) within the corresponding mind map to the corresponding mind map.

In addition, a term 'node' indicates one unit for displaying information on the mind map, and a term 'node level' means a branch order by which a specific node is branched from a center node. Therefore, '0-th level node' means the center node, a 'first level node' means a node branched once from the center node, and a 'second level node' means a node branched twice from the center node. Therefore, an 'n-th level node' means a node branched n times from the center node.

In addition, a term 'parent node' means an upper level node from which a specific node is directly branched, a term 'brother node' means a node having the same parent node as that of the specific node, and a term 'child node' means a lower level node directly branched from the specific node.

Further, a term 'schedule information of an electronic diary' includes date and hour information and memo information selected and input through an electronic diary interface by a user.

Meanwhile, it is to be noted that the alphabet k, 1, m, n, or the like, used hereinafter, which is used to relatively identify a node among nodes, is not used to indicate a limited specific node.

### Configuration and Function of Electronic Diary Device 100

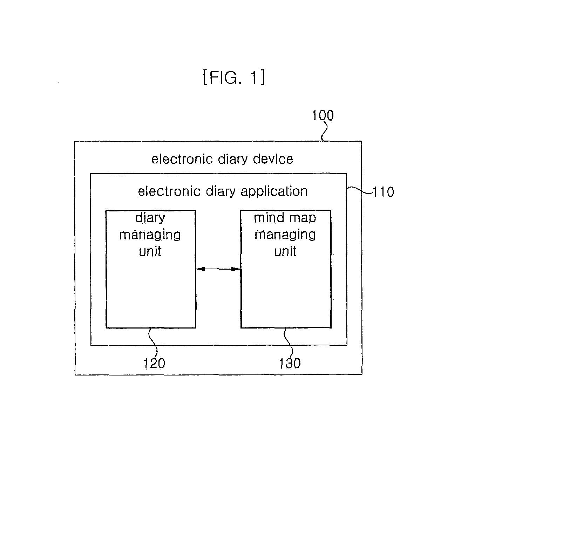

FIG. 1 is a block diagram showing a configuration of an electronic diary device according to an exemplary embodiment of the present invention. Hereinafter, a configuration and a function of the electronic diary device 100 according to an exemplary embodiment of the present invention will be described in detail with reference to FIG. 1.

As shown in FIG. 1, the electronic diary device 100 according to an exemplary embodiment of the present invention is a device storing and outputting schedule information input depending on a manipulation of a user and performing association between specific schedule information and a selected mind map in the case in which association between the specific schedule information and a specific mind map is requested depending on a selection of the user, and a digital device (user terminal) including a memory means and having a microprocessor mounted therein to have operation capability, such as a mobile communication terminal including a desktop computer, a notebook computer, a workstation, a palmtop computer, a personal digital assistant (PDA), a web pad, a smart phone, or the like, which is a generally used personal information communication device, may be used as the electronic diary device 100 according to an exemplary embodiment of the present invention as long as an electronic diary application 110 according to an exemplary embodiment of the present invention physically or logically implemented is installed therein. The electronic diary application 110 may be manufactured as a program and be transmitted from a separate file server (not shown) or may be input through an information storage medium such as a compact disk (CD), a universal serial bus (USB) memory, or the like, and be installed in the user terminal.

As shown in FIG. 1, the electronic diary application 110 according to an exemplary embodiment of the present invention may include a diary managing unit 120 and a mind map managing unit 130.

First, the diary managing unit 120 according to an exemplary embodiment of the present invention performs a general electronic diary function, that is, a function of outputting an electronic diary interface displaying pre-input schedule information through a display unit (not shown), receiving and storing schedule information input by a user through an input unit (a keyboard, a keypad, a touch screen, or the like), and outputting the schedule information on the electronic diary interface. Since a general electronic diary function itself adopts the technology well-known in the art, a detailed description thereof will be omitted.

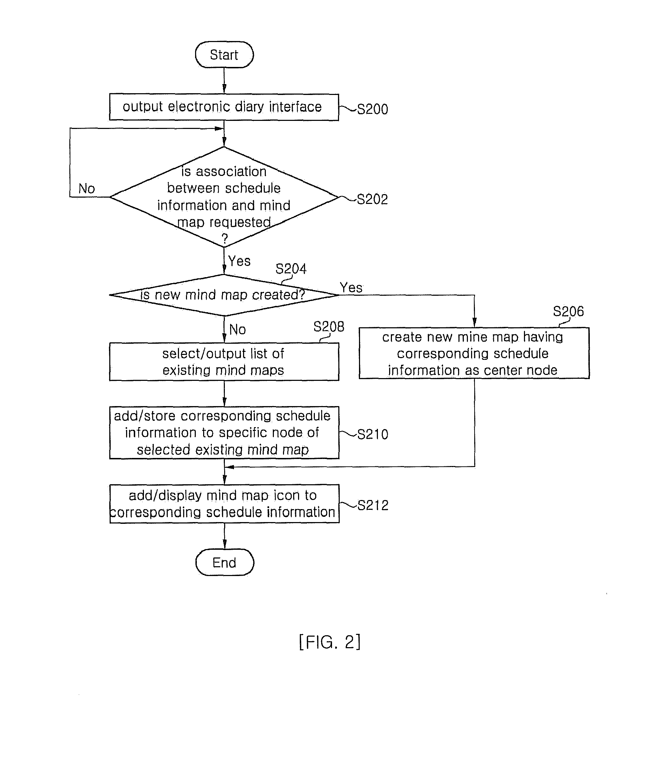

In addition, the diary managing unit 120 according to an exemplary embodiment of the present invention is configured to perform, together with the mind map managing unit 130, a function of associating specific schedule information with a mind map in the case in which association between the specific schedule information selected by the user among schedule information input, stored, and displayed through the electronic diary interface and the mind map is requested. Further, the diary managing unit 120 according to an exemplary embodiment of the present invention is configured to perform a function together with the mind map managing unit 130 so that changed data may be reflected in the mind map with which the corresponding schedule information is associated in the case in which the schedule information that has been already associated with the mind map is changed, that is, in the case in which the schedule information associated with the mind map is modified, deleted, or moved. Here, the meaning that new schedule information is associated with the mind map is that the corresponding schedule information is added as a new node of a specific mind map. In addition, the meaning that the changed data of the schedule information that has been already associated with the mind map is associated with the mind map is that a specific node in a specific mind map corresponding to the corresponding schedule information is changed in the specific mind map so as to correspond to the changed data of the corresponding schedule information. A detailed description for a process of associating the schedule information and the mind map with each other by the diary managing unit 120 and the mind map managing unit 130 according to an exemplary embodiment of the present invention will be provided below with reference to FIGS. 2, 3, and 6 to 8.

Meanwhile, the mind map managing unit 130 according to an exemplary embodiment of the present invention is configured to perform a function of a general mind map application, that is, a function of outputting a mind map interface, creating and storing a mind map through the mind map interface, and creating, editing, and storing nodes in the mind map. Since a function itself related to a general mind map application adopts the technology well-known in the art, a detailed description thereof will be omitted.

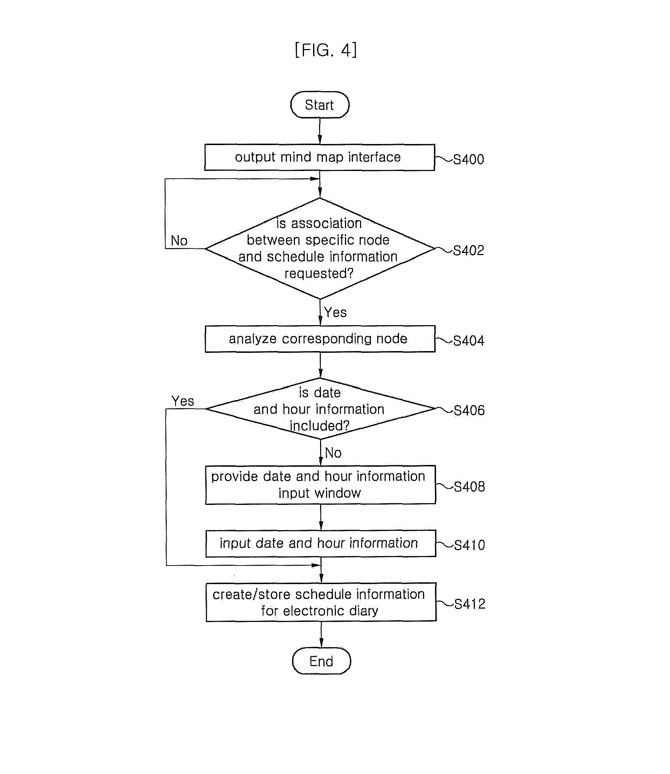

In addition, the mind map managing unit 130 according to an exemplary embodiment of the present invention is configured to perform, together with the diary managing unit 120 as described above, a function of creating and storing a content of a new node as new schedule information for an electronic diary in the case in which the new node is created on the mind map output through the mind map interface and association between the corresponding new node and the schedule information is requested. Further, the mind map managing unit 130 according to an exemplary embodiment of the present invention is configured to reflect, together with the diary managing unit 120 as described above, changed data in the schedule information associated with the correspond node in the case in which an existing node associated with the schedule information on the mind map output through the mind map interface is modified, deleted, or moved. A detailed description for a process of associating the mind map and the schedule information with each other by the mind map managing unit 130 and the diary managing unit 120 according to an exemplary embodiment of the present invention will be provided below with reference to FIGS. 4, 5, and 6 to 8.

### Examples of Electronic Diary Interface and Mind Map Interface

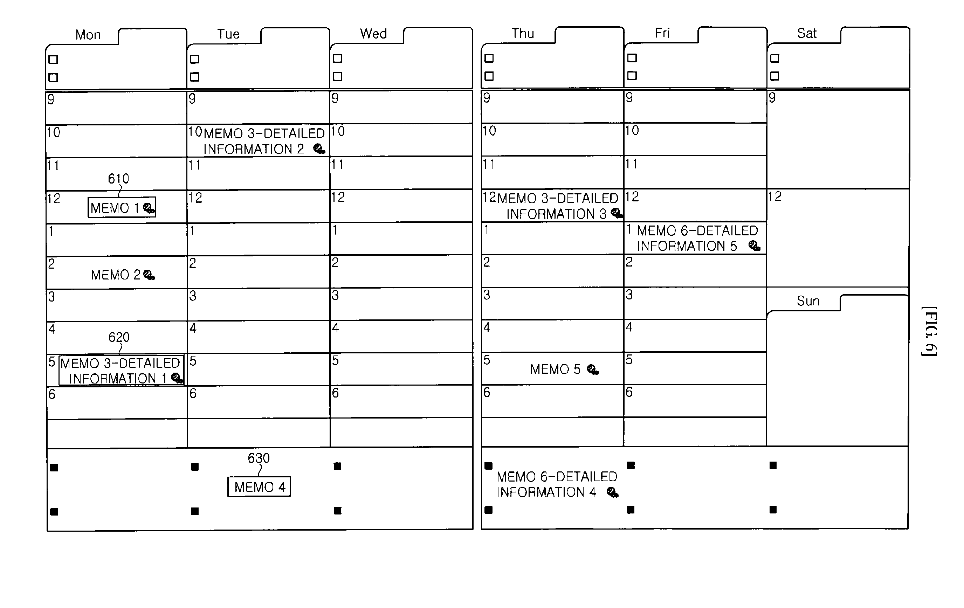

First, the electronic diary interface and the mind map interface provided by the electronic diary device 100 according to an exemplary embodiment of the present invention will be described with reference to FIGS. 6 to 8 in order to describe an entire concept of the present invention.

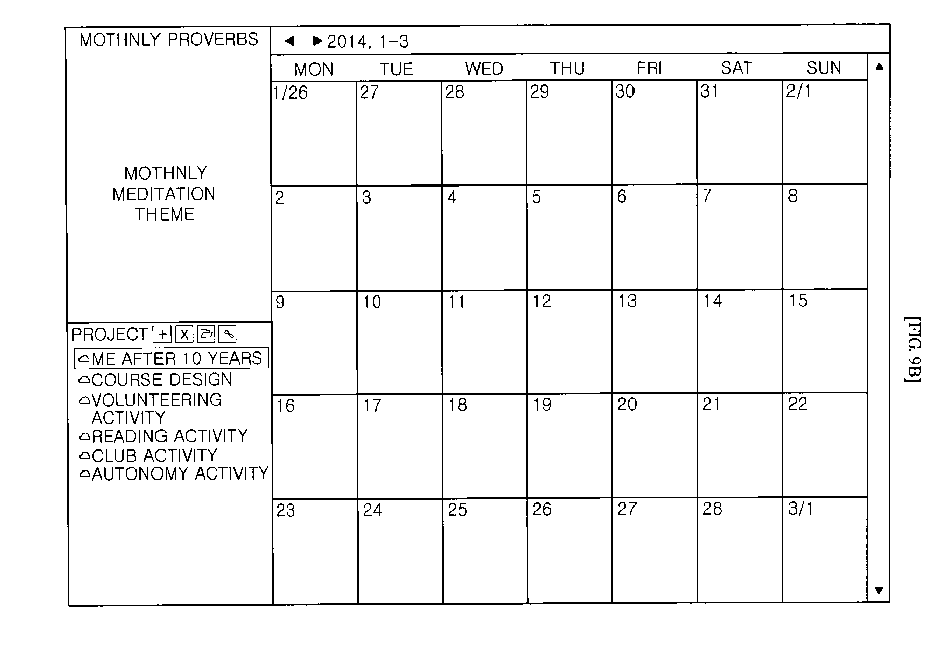

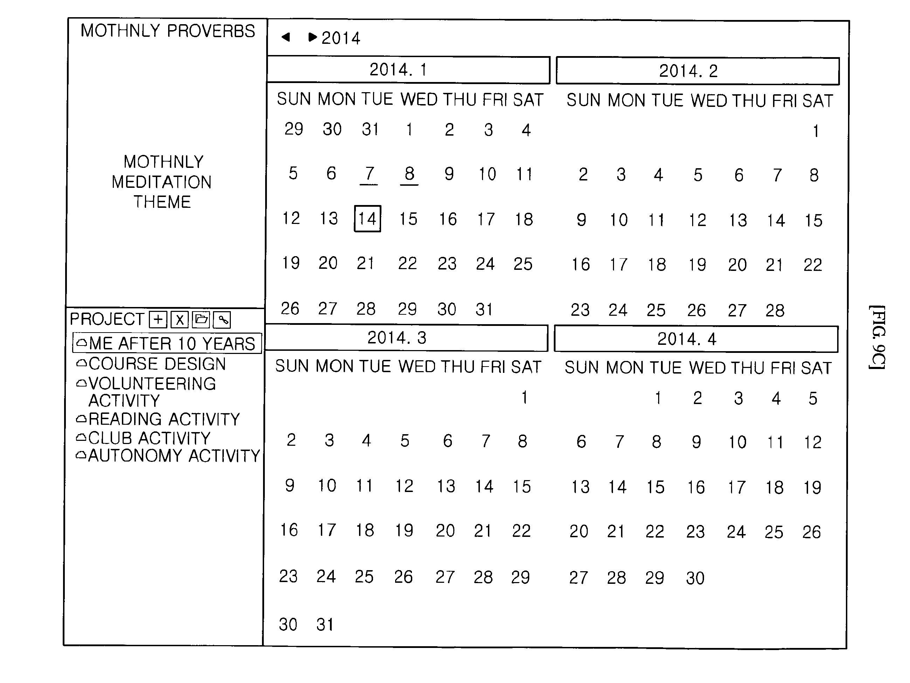

First, FIG. 6 showing an illustrative diagram of the electronic diary interface according to an exemplary embodiment of the present invention will be described. FIG. 6 shows a state in which the electronic diary interface 600 according to an exemplary embodiment of the present invention is operated in a weekly mode. However, the present invention is not limited thereto. That is, it will be obvious to those skilled in the art that the present invention supports a daily mode, a monthly mode (See FIG. 9B), and an annual mode (See FIG. 9C), and the daily mode, the monthly mode, and/or the annual mode will fall within the scope of the present invention as long as they include a technical spirit of the present invention. In the weekly mode, the diary managing unit 120 outputs the electronic diary interface 600, and the electronic diary interface 600 displays a plurality of schedule information that has been already input and stored depending on a manipulation of the user, as shown in FIG. 6. In the present specification, the 'schedule information' may be configured of 'date and hour information and memo information' or be configured of 'date and hour information, memo information, and detailed information'. The memo information and the detailed information mean concrete information related to a schedule directly input by the user. For example, the memo information means concrete information for a schedule such as 'Gangnam Station meeting', or the like, directly input by the user. Meanwhile, according to an exemplary embodiment of the present invention, the concrete information related to the schedule input by the user may be divided into the memo information and the detailed information. A preset divider may be used in order to divide the memo information and the detailed information in the concrete information input by the user from each other. For example, in the case in which the divider is set to a dash (-), when the information input by the user is 'A company patent meeting-2nd Gangnam Station', 'A company patent meeting' in the information input by the user is divided as the memo information, and '2nd Gangnam Station' is divided as the detailed information. In the case in which the preset divider is not included in the information input by the user, the entirety of information input by the user is divided and treated as the memo information. As the divider as described above, one of various characters and signs may be arbitrarily adopted as needed. Therefore, in FIG. 6, it may be appreciated that a memo 1 610 includes only the memo information and a memo 3 620 includes memo information 3 and detailed information 1.

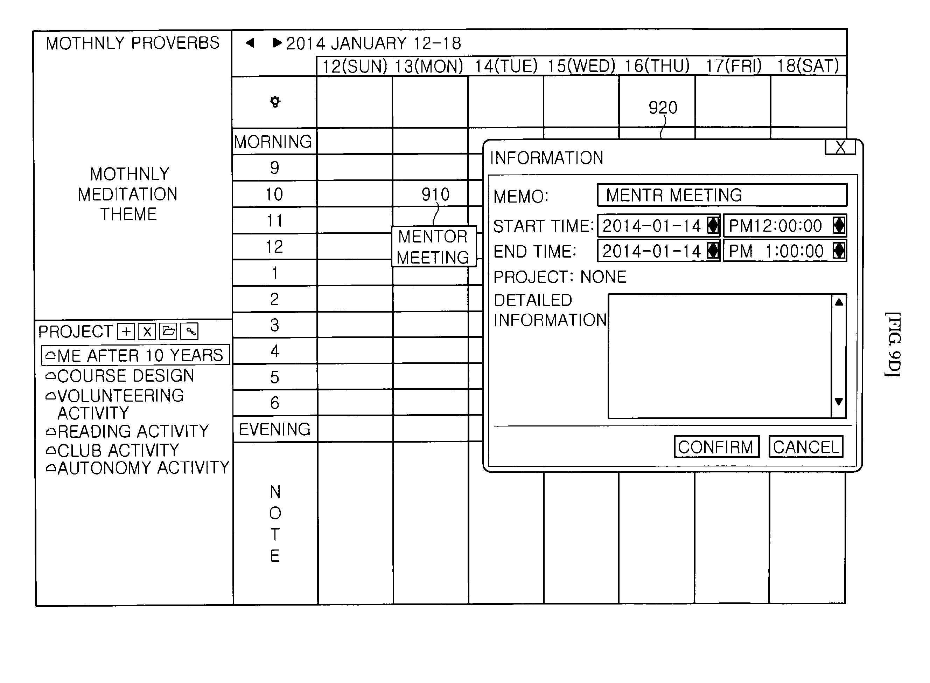

In addition, in another exemplary embodiment of the present invention, the memo information and the detailed information as described above may be divided and set through an input blank of an input interface provided by the diary managing unit 120 in order to input the schedule information. This exemplary embodiment will be described below with reference to FIG. 9D.

Meanwhile, the date and hour information includes at least year, month, and date, and may include time information in some cases. According to an exemplary embodiment, the date and hour information may be configured to be directly input by the user or may be automatically set depending on a position at which the user inputs the memo. In detail, in FIG. 6, schedule screens in each day of week are configured so that schedules may be input and displayed from 9 a.m. to 7 p.m. in a unit of one hour and schedules of which a time is not set may be input and displayed below a position at which the schedules may be input and displayed from 9 a.m. to 7 p.m. Therefore, in FIG. 6, since the memo 1 610 is input at a 11 a.m. schedule blank of a Monday schedule blank, it has date and hour information of 11 a.m. of August 5, 2013 (it is assumed that FIG. 6 shows schedule information of a second week in August 2013). On the other hand, since a memo 4 630 is input at a position at which the time information is not set, it has date and hour information of August 6, 2013. In addition, in another exemplary embodiment of the present invention, the time information as described above may also be divided and set through an input blank of an input interface provided by the diary managing unit 120 in order to input the schedule information. This exemplary embodiment will be described below with reference to FIG. 9D.

In addition, in the case in which specific schedule information is associated with a specific mind map, the diary managing unit 120 according to an exemplary embodiment of the present invention is configured to output a mind map icon corresponding to the specific mind map alongside the corresponding schedule information output through the electronic diary interface 600. In FIG. 6, it may be confirmed that this mind map icon is output as an icon having a globe shape alongside the memo information. In the case in which the mind map icon is selected depending on a manipulation of the user, the diary managing unit 120 may load the specific mind map corresponding to the corresponding mind map icon using the mind map managing unit 130 and output the specific mind map through the mind map interface.

First, the mind map managing unit 130 according to an exemplary embodiment of the present invention may display at least one schedule information set to be associated with the specific mind map on the mind map in various schemes. In an exemplary embodiment, the mind map managing unit 130 may be configured to add the entirety of the schedule information as a first level node of the mind map, as described above. In another exemplary embodiment, the mind map managing unit 130 may be configured to add only a portion of the schedule information as the first level node of the mind map. In still another exemplary embodiment, the mind map managing unit 130 may be configured to add the date and hour information (or at least a portion of the date and hour information) in the schedule information as the first level node of the mind map and add the remaining information as a second level node. In yet still another exemplary embodiment, the mind map managing unit 130 may be configured to add the date and hour information (or at least a portion of the date and hour information) in the schedule information as the first level node of the mind map, add the memo information as the second level node, and add the detailed information as a third level node. In yet still another exemplary embodiment, the mind map managing unit 130 may be configured to add the memo information in the schedule information as the first level node and add the remaining information as the second level node. In yet still another exemplary embodiment, the mind map managing unit 130 may be configured to add the memo information in the schedule information as the first level node, add the date and hour information (or at least a portion of the date and hour information) as the second level node, and add the detailed information as the third level node.

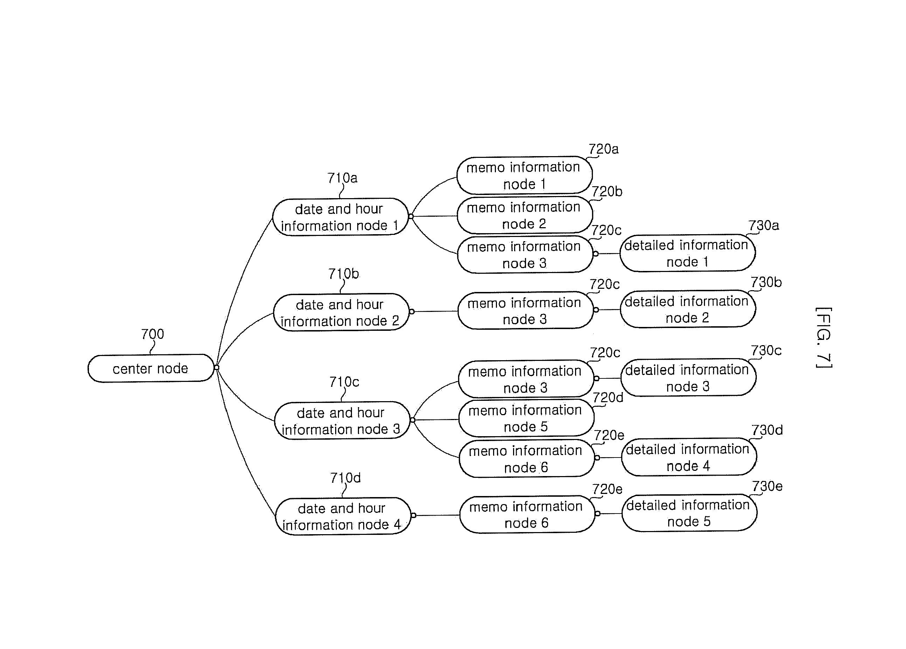

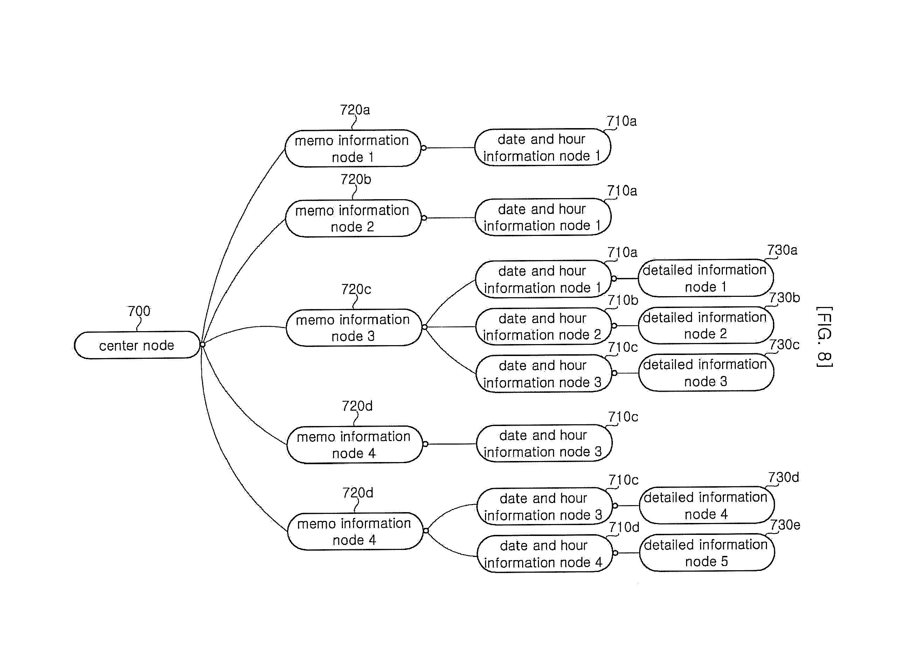

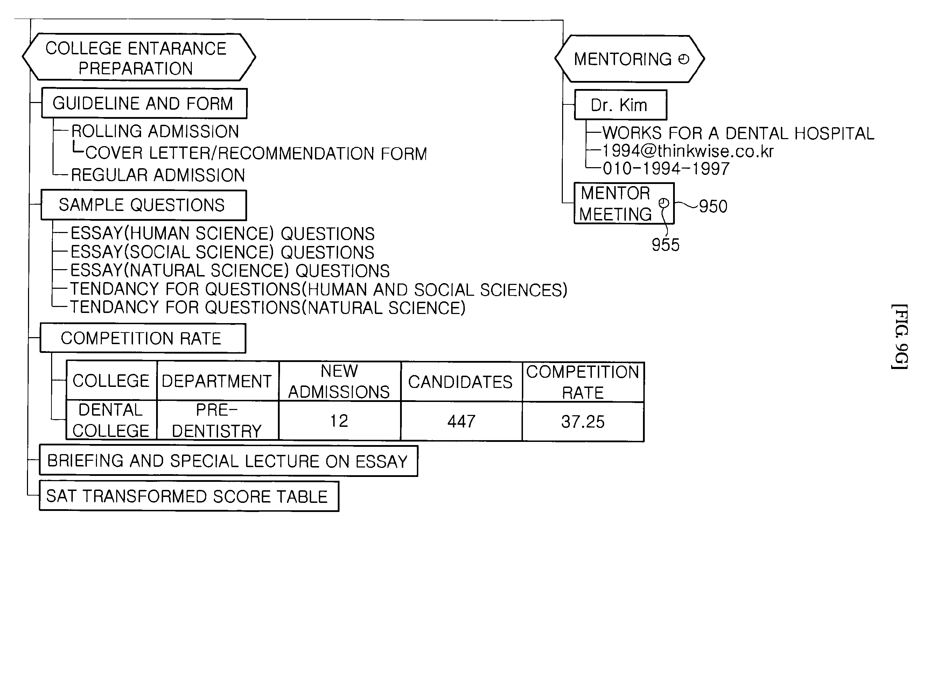

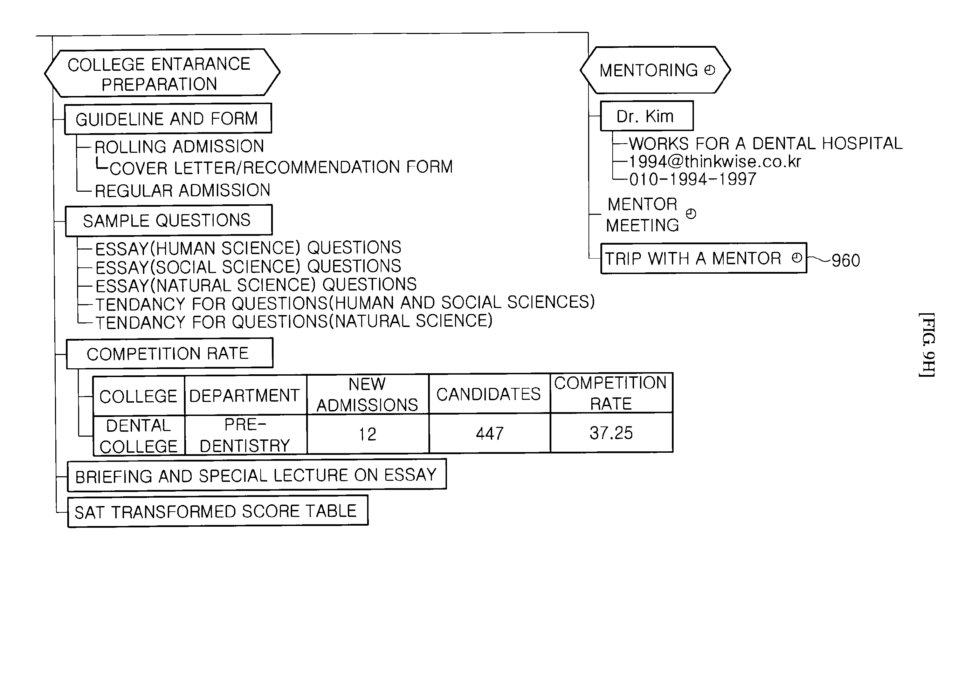

FIG. 7 is an illustrative diagram of a mind map configured by using date and hour information as a first level node according to an exemplary embodiment of the present invention; and FIG. 8 is an illustrative diagram of a mind map configured by using memo information as a first level node according to an exemplary embodiment of the present invention. Next, a mind map interface provided by the mind map managing unit 130 according to an exemplary embodiment of the present invention will be described in detail with reference to FIGS. 7 and 8. However, it is to be noted that mind maps configured of only a plurality of schedule information are shown by way of example in FIGS. 7 and 8 in order to describe an association function between the schedule information and the mind map. As described above, the mind map associated with the schedule information may substantially include a plurality of information in addition to the schedule information as a plurality of nodes, and this mind map will be described below with reference to FIGS. 9G and 9H.

First, as shown in FIGS. 7 and 8, the mind map provided by the mind map managing unit 130 according to an exemplary embodiment of the present invention may include first level nodes branched once from a center node 700, which is 0-th node, second level nodes branched once from the first level nodes, and third level nodes branched once again from the second level nodes. The sum of contents of the first to third level nodes may correspond to the schedule information. Therefore, in an exemplary embodiment, one schedule information may be divided to form the first to third level nodes. In addition, in another exemplary embodiment, when the user is to structuralize a plurality of schedule information having a predetermined relationship, the user may want to structuralize and view the schedule information based on the date and hour information or want to structuralize and view the schedule information based on a memo input by the user. Therefore, the mind map managing unit 130 according to an exemplary embodiment of the present invention may be configured to dispose specific information among necessary information (at least a portion of the date and hour information and the memo information) configuring the schedule information requested to be associated with the mind map as described above in the first level node and dispose the remaining information in the second level node depending on the setting or the manipulation of the user to create the mind map. In this case, in another exemplary embodiment, the schedule information having the first level nodes of the same content may be disposed as brother nodes having one first level node as a parent node (that is, in a tree form). In another exemplary embodiment, even though the schedule information has the first level nodes of the same content, the schedule information may be disposed so as to have different first level nodes as a parent node.

Meanwhile, FIG. 7 shows a mind map screen provided by the mind map managing unit 130 in a state in which the schedule information on the electronic diary interface of FIG. 6 is set to be associated with one mind map and the 'date and hour information' is set as the first level node. Meanwhile, FIG. 8 shows a mind map screen provided by the mind map managing unit 130 in a state in which the schedule information on the electronic diary interface of FIG. 6 is set to be associated with one mind map and the 'memo information' is set as the first level node. In addition, information set as the first level node may be changed depending on a selection of the user, and in the case in which the information set as the first level node is changed (for example, from the date and hour information to the memo information), the diary managing unit 120 may reconfigure a mind map from the mind map shown in FIG. 6 to the mind map shown in FIG. 7 and output the reconfigured mind map. Since a main technical feature of the present invention is to associate the schedule information of the electronic diary with the mind map, it is obvious to those skilled in the art that various exemplary embodiments as described above fall within the scope of the present invention.

Again referring FIG. 7, the date and hour information is set as the first level node, the memo information is set as the second level node, and the detailed information is set as the third level node. Here, a dividing unit for dividing the date and hour information may be variously set depending on a selection of the user. In the present specification, a 'date and hour information dividing unit' is a dividing unit for judging that the information has the same date and hour information. For example, in the case in which the date and hour information dividing unit is a day, memo information of schedule information having date and hour information of the same day configures a mind map as child nodes having a date and hour information node of the same day as a parent node. In addition, in the case in which the date and hour information dividing unit is a week, memo information of schedule information having date and hour information of the same week configures a mind map as child nodes having a date and hour information node of the same week as a parent node. The date and hour information dividing units may be variously selected and used as needed. In FIG. 7, the case in which the date and hour information dividing unit is set to the day is shown. FIG. 6 shows the electronic diary interface 600 showing the schedule information of the second week in August 2013, and it is assumed that schedule information (memo 1, memo 2, memo 3, memo 5, and memo 6) associated with the mind map shown in FIG. 6 is associated with one specific mind map. Therefore, date and hour information of 'August 5, 2013' (or 'August 5', '08/05', or the like) is displayed in a date and hour information node 1 710a (that may be displayed in any scheme that may divide a date since the date and hour information dividing unit is the day unit, hereinafter, it is assumed that 'month+date' is displayed), and three memos (memo 1, memo 2, and memo 3) recorded on the same date are added as child nodes having the date and hour information node 1 710a as a parent node to the date and hour information node 1 710a. Therefore, the memo 1 is displayed in a memo information node 1 720a, the memo 2 is displayed in a memo information node 2 720b, and the memo 3 is displayed in a memo information node 3 720c. Here, the memo information node 1 720a to the memo information node 3 720c become brother nodes branched once from the same parent node. Meanwhile, since the memo 3 on August 5 includes detailed information 1, the detailed information 1 is displayed as a detailed information node 1 730a having the memo information node 3 720c as a parent node on the mind map.

Likewise, date and hour information of 'August 6' is displayed in a date and hour information node 2 710b, a memo 3 is displayed in a memo information node 3 720c having the date and hour information node 2 710b as a parent node, and detailed information 2 is displayed in a detailed information node 2 730b having the memo information node 3 720c as a parent node. Meanwhile, since the memo 4 displayed on the electronic diary interface 600 is not associated with the mind map, it is not displayed on the mind map.

Meanwhile, since the schedule information is not recorded on August 7, a date and hour information node itself for the schedule information is not formed. Therefore, date and hour information of 'August 8' is displayed in a date and hour information node 3 710c, memo information 3 is displayed in a memo information node 3 720c having the date and hour information node 3 710c as a parent node, and detailed information 3 is displayed in a detailed information node 3 730c, which is a child node of the memo information node 3 720c. In addition, similarly, memo information 5 is displayed in a memo information node 5 720d having the date and hour information node 3 710c as a parent node, memo information 6 is displayed in a memo information node 6 720e having the date and hour information node 3 710c as a parent node, and detailed information 4 is displayed in a detailed information node 4 730d, which is a child node of the memo information node 6 720e.

Further, similarly, date and hour information of 'August 9' is displayed in a date and hour information node 4 710d, memo information 6 is displayed in a memo information node 6 720e having the date and hour information node 4 710d as a parent node, and detailed information 5 is displayed in a detailed information node 5 730e, which is a child node of the memo information node 6 720e.

Meanwhile, as described above, in another exemplary embodiment, separate detailed information nodes may be configured so as not to be displayed. In this case, the memo 3 and the detailed information 1 are displayed together with each other in the memo information node 3 720c, which is a child node of the date and hour information node 1 710a. Likewise, the memo 3 and the detailed information 2 are displayed together with each other in the memo information node 3 720c, which is a child node of the date and hour information node 2 710b. In addition, the memo 3 and the detailed information 3 are displayed together with each other in the memo information node 3 720c, which is a child node of the date and hour information node 3, the memo 6 and the detailed information 4 are displayed together with each other in the memo information node 6 720e, which is a child node of the date and hour information node 3, and the memo 6 and the detailed information 5 are displayed together with each other in the memo information node 6 720e, which is a child node of the date and hour information node 4.

As described above, the mind map managing unit 130 according to an exemplary embodiment of the present invention configures and outputs the mind map using the schedule information requested to be associated with the specific mind map, such that the schedule information having a predetermined relationship may be visually structuralized as the mind map and be provided to the user. Although one specific mind map has been described by way of example for clearness and convenience of explanation, the present invention may support a plurality of mind maps. That is, the user may associate schedule information having a predetermined relationship (for example, schedule information related to a project A) with a mind map for the project A and associate schedule information related to a project B with a mind map for the project B. Therefore, in the case in which the user reproduces the mind map for the schedule information related to the project A, the user may recognize all of the schedule information related to the project A at a glance using the mind map.

Again referring to FIG. 8 together with the above description, a mind map shown in FIG. 8 is in a state in which the memo information is set as a first level node. Therefore, as shown in FIG. 8, the mind map managing unit 130 sets the memo information node as a first level node, sets the date and hour information node as a second level node, and sets the detailed information node as a third level node to structuralize schedule information associated with a corresponding mind map, thereby creating and outputting a mind map. In more detail, as shown in FIG. 8, the memo 1 of FIG. 6 is displayed in a memo information node 1 720a, and 'August 5' is displayed in a date and hour information node 1 710a, which is a child node of the memo information node 1 720a. Likewise, the memo 2 of FIG. 6 is displayed in a memo information node 2 720b, and 'August 5' is displayed in a date and hour information node 1 710a, which is a child node of the memo information node 2 720b. Further, the memo 3 of FIG. 6 is displayed in a memo information node 3 720c, 'August 5' is displayed in a date and hour information node 1 710a, which is a child node of the memo information node 3 720c, and detailed information 1 is displayed in a detailed information node 1 730a, which is a child node of the date and hour information node 1 710a. Likewise, 'August 6' is displayed in a date and hour information node 2 710b, which is a child node of the memo information node 3 720c, detailed information 2 is displayed in a detailed information node 2 730b, which is a child node of the date and hour information node 2 710b, 'August 8' is displayed in a date and hour information node 3 710c, which is a child node of the memo information node 3 720c, and detailed information 3 is displayed in a detailed information node 3 730c, which is a child node of the date and hour information node 3 710c. In addition, the memo 5 of FIG. 6 is displayed in a memo information node 5 720d, 'August 8' is displayed in a date and hour information node 3 710c, which is a child node of the memo information node 5 720d, detailed information 4 is displayed in a detailed information node 4 730d, which is a child node of the date and hour information node 3 710c, 'August 9' is displayed in a date and hour information node 4 710d, which is a child node of the memo information node 5 720d, and detailed information 5 is displayed in a detailed information node 5 730e, which is a child node of the date and hour information node 4 710d. Therefore, in the case in which the mind map managing unit 130 configures the mind map using the memo information as the first level node and provides the configured mind map to the user, as shown in FIG. 8, the user may structuralize and recognize a plurality of schedules based on the memo information.

### Examples of Process of Associating Schedule Information of Electronic Diary and Mind Map with Each Other

FIG. 2 is a flow chart showing a process of associating schedule information and a mind map with each other performed by the electronic diary device in the case in which association between the schedule information of the electronic diary and the mind map is newly requested according to an exemplary embodiment of the present invention. Hereinafter, a process of associating specific schedule information and a mind map with each other in the case in which association between the specific schedule information of the electronic diary and the mind map is newly requested according to an exemplary embodiment of the present invention will be described with reference to FIGS. 2, 6 and 7. For the purpose of illustration, it is assumed that a situation is similar to the situation as described above and the date and hour information is set as the first level node.

When the user manipulates the electronic diary device 100 to execute the electronic diary application 110, the diary managing unit 120 outputs the electronic diary interface 600 as shown in FIG. 6 (S200). As shown in FIG. 6, schedule information that has been already input and stored is included in the electronic diary interface 600. The user may input new schedule information through the electronic diary interface 600 or delete or modify existing schedule information.

In a state as shown in FIG. 6, in the case in which the user makes a request to newly associate schedule information (for example, memo 4 of FIG. 6) that has not been previously associated with the mind map with the mind map, the diary managing unit 120 outputs a list of one or more mind maps that have been previously associated with the schedule information through a mind map selection interface (not shown), outputs a mean capable of searching and designating a new mind map to be associated, and output a means capable of creating a new mind map.

First, the diary managing unit 120 decides whether the user is to create the new mind map associated with the selected schedule information or is to associate the selected schedule information with the previously created mind map (S202). In the case in which the user selects creating the new mind map associated with the selected schedule information, the diary managing unit 120 may control the mind map managing unit 130 to create and store a new mind map having the corresponding schedule information as a center node (S204 and S206). In this case, in another exemplary embodiment, the entirety of the schedule information may be stored as a content of the center node or only the remaining information (the memo information or the memo information and the detailed information) except for the date and hour information included in the schedule information may be stored as a content of the center node. In still another exemplary embodiment, the user may input the content of the center node, and the selected schedule information may be added as a lower level node of the center node.

Meanwhile, in the case in which the user is to associate the selected schedule information with an existing mind map, the diary managing unit 120 outputs a list of mind maps that have been previously created and receives a selection of the user (S208). When the mind map with which the selected schedule information is to be associated is selected, the diary managing unit 120 may control the mind map managing unit 130 to allow the selected schedule information to be added to a specific node of the existing mind map selected by the user (S210). Here, as described above, in another exemplary embodiment, the selected schedule information may be added to the specific node of the mind map in one of several schemes. In an exemplary embodiment, the entirety of the schedule information may be added as the first level node to the selected mind map. In another exemplary embodiment, only the memo information (or the memo information+the detailed information) in the schedule information may be added as the first level node to the selected mind map, and in the case in which the corresponding node is selected (that is, in the case in which the corresponding node is clicked, touched, or moused over), date and hour information of the corresponding node may be added in a format in which it is displayed through a separate window, or the like. In still another exemplary embodiment, the date and hour information in the schedule information may be added as the first level node to the mind map, and the remaining information in the schedule information may be added as the second level node to the mind map. In this case, when a first level schedule information node having the same schedule information as a content is already present in the corresponding mind map, the remaining information (for example, the memo information or the memo information+the detailed information) except for the date and hour information in the corresponding schedule information is added as the second level node having the already present first level schedule information node as the parent node to the corresponding mind map. For example, in the case in which the memo 4 630 of FIG. 6 is added to the mind map as shown in FIG. 7, since the date and hour information node 2 710b, which is the first level node corresponding to the date and hour information ('August 6') of the memo 4 630, is already present in the mind map, the memo 4 630 may be added as a child node of the date and hour information node 2 710b to the mind map. In yet still another exemplary embodiment, the date and hour information in the schedule information is added as the first level node to the mind map, the memo information in the schedule information is added as the second level node to the mind map, and the detailed information in the schedule information is added as the third level node to the mind map. Also in this case, when a node corresponding to partial information of the corresponding schedule information is present in the mind map, only the remaining portion of the corresponding schedule information is added as a child node of the existing node to the mind map. In yet still another exemplary embodiment, the memo information in the corresponding schedule information may be added as the first level node to the mind map, and the remaining information in the schedule information may be added as the second level node to the mind map. In yet still another exemplary embodiment, the memo information in the corresponding schedule information is added as the first level node to the mind map, the date and hour information in the schedule information is added as the second level node to the mind map, and the detailed information in the schedule information is added as the third level node to the mind map. It will be obvious to those skilled in the art that also in these exemplary embodiments, as described above, in the case in which a node indicating the same information among information divided for each node among the schedule information is already present in the mind map, the remaining content of the schedule information except for the same information is added as a child node of the corresponding node to the mind map. As described above, according to exemplary embodiments of the present invention, the schedule information of the electronic diary selected by the user may be added to the specific mind map selected by the user in one of various schemes. Meanwhile, these various exemplary embodiments may be substantially accomplished by creating and storing one mind map node information corresponding to the selected schedule information and allowing the mind map managing unit 130 to analyze the mind map node information corresponding to the schedule information to configure the mind map depending on the setting. For example, schedule information such as 'memo 3-detailed information 1' of FIG. 6 may be stored as node information for a mind map having a content such as date and hour information: August 5, 5 p.m., memo information: memo 3, detailed information: detailed information 1', and the mind map managing unit 130 may be configured to analyze the schedule information depending on the display mode setting to configure and output the mind map. In this case, as a display mode of the mind map, as described above, there may be a display mode of adding the entirety of the schedule information as the first level node of the mind map, a display mode of adding only a portion of the schedule information as the first level node of the mind map, a display mode of adding the date and hour information (or at least a portion of the date and hour information) in the schedule information as the first level node of the mind map and adding the remaining information as the second level node, a display mode of adding the date and hour information (or at least a portion of the date and hour information) in the schedule information as the first level node of the mind map, adding the memo information as the second level node, and adding the detailed information as the third level node, a display mode of adding the memo information in the schedule information as the first level node and adding the remaining information as the second level node, a display mode of adding the memo information in the schedule information as the first level node, adding the date and hour information (or at least a portion of the date and hour information) as the second level node, and adding the detailed information as the third level node, and the like. These display modes may be set depending on a selection of the user, and display modes other than the plurality of display modes described above may also be present. Since the most important technical feature of the present invention is to associate the schedule information of the electronic diary with the mind map, it will be obvious to those skilled in the art that various modifications and alterations as well as the above-mentioned exemplary embodiments fall within the scope of the present invention as long as they include this technical feature.

When the association between the selected schedule information and the specific mind map is completed, the diary managing unit 120 adds a mind map icon corresponding to the mind map associated with the corresponding schedule information and displays the added mind map icon on the electronic diary interface 600 (S212). Therefore, in the case in which the memo 4 630 of FIG. 6 is newly associated with the specific mind map through the process as described above, a mind map hyper link icon having a globe shape is newly added to and displayed in the memo 4, and in the case in which the user selects the mind map icon added to the memo 4, the mind map managing unit 130 is executed, such that the associated mind map is invoked and output.

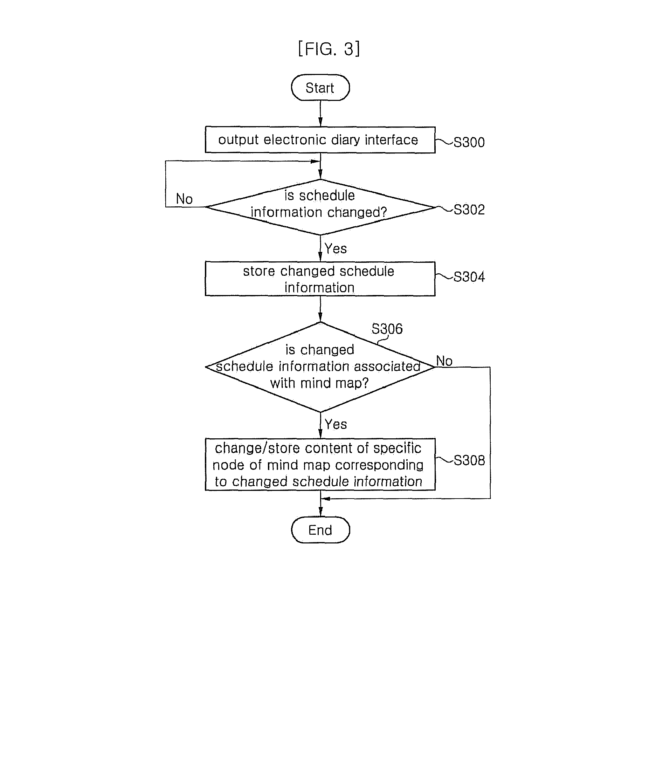

FIG. 3 is a flow chart showing a process of associating schedule information and a mind map with each other performed by the electronic diary device in the case in which the schedule information of the electronic diary is changed according to an exemplary embodiment of the present invention. Hereinafter, operation processes of the diary managing unit 120 and the mind map managing unit 130 in the case in which the schedule information output through the electronic diary interface 600 is changed will be described in detail with reference to FIG. 3. For the purpose of illustration, it is assumed that a situation is similar to the situation as described above and the date and hour information is set as the first level node.

When the user manipulates the electronic diary device 100 to execute the electronic diary application 110, the diary managing unit 120 outputs the electronic diary interface 600 as shown in FIG. 6 (S300). As shown in FIG. 6, schedule information that has been already input and stored is included in the electronic diary interface 600. The user may input new schedule information through the electronic diary interface 600 or delete or modify existing schedule information.

In a state as shown in FIG. 6, the diary managing unit 120 decides whether or not the user changes (deletes, modifies, moves, or the like) the previously input schedule information (S320), and stores the changed schedule information (S304) in the case in which the previously input schedule information is changed. In addition, the diary managing unit 120 decides whether or not the schedule information changed by the user is associated with the specific mind map (S306), and changes and stores a specific node of the corresponding mind map corresponding to the changed schedule information depending on changed data (S308) in the case in which the changed schedule information is associated with the specific mind map. In more detail, in an example shown in FIG. 6, in the case in which the memo 4 630 is changed, since the memo 4 630 is not currently associated with any mind map, the memo 4 is stored in a state in which it is changed depending on a manipulation of the user without performing an additional association process. On the other hand, in the example shown in FIG. 6, in the case in which the schedule information corresponding to the memo 3 620 is changed, since the schedule information corresponding to the memo 3 620 is already associated with the specific mind map, the diary managing unit 120 controls the mind map managing unit 130 to change and store the specific node of the specific mind map corresponding to the schedule information including the memo 3 620 depending on a changed content of the memo 3 620. For example, since the entire of the schedule information including the memo 3 620 is deleted, since the specific node corresponding to the schedule information is deleted, the memo information node 3 720c and the detailed information node 1 730a, which are child nodes of the date and hour information node 1 710a, are deleted in FIG. 7. In addition, in the case in which the memo 3 in the schedule information including the memo 3 620 is modified into a memo 3', a content displayed in the memo information node 3 720c, which is the child node of the date and hour information node 1 710a, is changed from the memo 3 into the memo 3' in FIG. 7. Further, in the case in which the detailed information 1 in the schedule information including the memo 3 620 is modified into detailed information 1', a content displayed in the detailed information node 1 730a is changed from the detailed information 1 into the detailed information 1' in FIG. 7. Meanwhile, in the case in which the schedule information including the memo 3 620 is moved from a current position to 12 p.m. of a Tuesday schedule blank depending on a manipulation of the user, the date and hour information of the schedule information including the memo 3 620 is changed from 'August 5, 5 p.m.' into 'August 6, 12 p.m.'. Therefore, in FIG. 7, the memo information node 3 720c, which is the child node of the date and hour information node 1 710a, and the detailed information node 1 730a, which is the child node of the memo information node 3 720c, are moved together with each other to a lower level node of the date and hour information node 2 710b and are displayed on the mind map. That is, in the case in which the change as described above is made, the mind map is changed so that the memo information node 3 720c is added as the child node of the date and hour information node 2 710b and the detailed information node 1 730a is added as the child node of the memo information node 3 720c.

### Example of Process of Associating Mind Map and Schedule Information of Electronic Diary with Each Other

FIG. 4 is a flow chart showing a process of associating schedule information and a mind map with each other performed by the electronic diary device in the case in which association between the schedule information and the mind map with respect to a specific node is newly requested according to an exemplary embodiment of the present invention. Hereinafter, a process of associating a specific node and an electronic diary with each other in the case in which association between the specific node on the mind map and the electronic diary is newly requested according to an exemplary embodiment of the present invention will be described with reference to FIGS. 4, 6 and 7. For the purpose of illustration, it is assumed that a situation is similar to the situation as described above and the date and hour information is set as the first level node.

When the mind map is invoked depending on a manipulation of the user (for example, a click (touch) of the mind map icon, a click (touch) of a mind map editor icon, or the like, as described above) after the electronic diary application 110 is executed, the mind map managing unit 130 outputs the mind map interface showing the mind map selected by the user (S400). As described above, the mind map managing unit 130 may be configured to analyze a plurality of schedule information related to the specific mind map depending on the setting of the display mode to configure and output the mind map. It may be confirmed that two examples depending on the setting of the display mode are shown in FIGS. 7 and 8.

In a state as shown in FIG. 7, the mind map managing unit 130 decides whether association between the schedule information and the specific node is requested depending on a manipulation of the user (S402). In FIG. 7, since all nodes are currently in a state in which they are associated with the schedule information, it is assumed that a new node is created as the first level node branched once from the center node 700 and a 'memo 7' is input as a content of the created node. In this case, in the case in which the association between the node newly created depending on a manipulation of the user and the schedule information is requested, the mind map managing unit 130 analyzes the specific node of which the association with the schedule information is requested (S404) and decides whether or not the specific node of which the association with the schedule information is requested includes the date and hour information (S406).

In the case in which it is decided that the specific node of which the association with the schedule information is requested does not include the data and hour information, the mind map managing unit 130 provides a date and hour information input window through which the user may input the date and hour information (S408), and receives the date and hour information input depending on a manipulation of the user (S410). Here, the date and hour information input window may be provided to the user in various schemes. In an exemplary embodiment, the date and hour information input window provided to the user may be a calendar scheme capable of selecting year, month, and date. In another exemplary embodiment, the date and hour information input window provided to the user may be another calendar scheme capable of selecting year, month, date, and hour. In still another exemplary embodiment, the date and hour information input window provided to the user may be a text input window through which the date and hour information may be input.

When the information input to the corresponding node includes the date and hour information or the date and hour information is input through the date and hour information input window, the mind map managing unit 130 controls the diary managing unit 120 to create and store the schedule information for an electronic diary corresponding to the specific node of which the association is requested (S412). When it is assumed that the date and hour information is set to 'August 5, 2013' with respect to the specific node to which the 'memo 7' as described above is input, such that the corresponding schedule information is created and stored, the electronic diary managing unit 120 will subsequently output the 'memo 7' on a lower end of a Monday schedule information display screen of the electronic diary interface 600 shown in FIG. 6.

The association process between the node branched once from the center node 700 and the schedule information has been described in the above examples. However, in the case in which association between the second level node present as the child node of the date and hour information and the schedule information is requested in a state in which the date and hour information is present as the first level node as shown in FIG. 7, the mind map managing unit 130 according to the present invention may associate the corresponding node with the schedule information by setting a content of the corresponding second level node to the memo information and setting a content of the first level node corresponding to the parent node of the corresponding second level node to the date and hour information. For example, in FIG. 7, after the node is newly created as the child node of the date and hour information node 2 710b and the 'memo 7' is input to the corresponding node, when the association between the corresponding node and the schedule information is requested, the date and hour information for an electronic diary such as 'date and hour information: August 6, 2013, memo information: memo 7' may be created and stored. That is, in this case, the child node inherits an attribute (content) of the parent node as they are. This may be similarly applied to an example shown in FIG. 8. For example, in Fig. 8, when the date and hour information node is added as the child node of the memo information node 1 720a, it is to be noted that the added date and hour information node inherits the memo information 1 as it is.

Meanwhile, in another exemplary embodiment, in the case which association between a specific upper level node having a lower level node (nodes) (for example, a child node, a grandchild node, and the like) and the schedule information is newly requested, association between all of the lower level nodes that are not previously associated with the schedule information among the lower level nodes belonging to the upper level node of which the association is newly requested and the schedule information may be performed. For example, in an example shown in FIG. 7, in a state in which association between all of the lower level nodes of the date and hour information node 1 710a and the schedule information is not previously performed, when association between the date and hour information node 1 710a and the schedule information is requested, three schedule information for an electronic diary each including 'date and hour information 1 + memo information 1', 'date and hour information 1 + memo information 2', and 'date and hour information 1 + memo information 3 + detailed information 1' as the schedule information may be created.

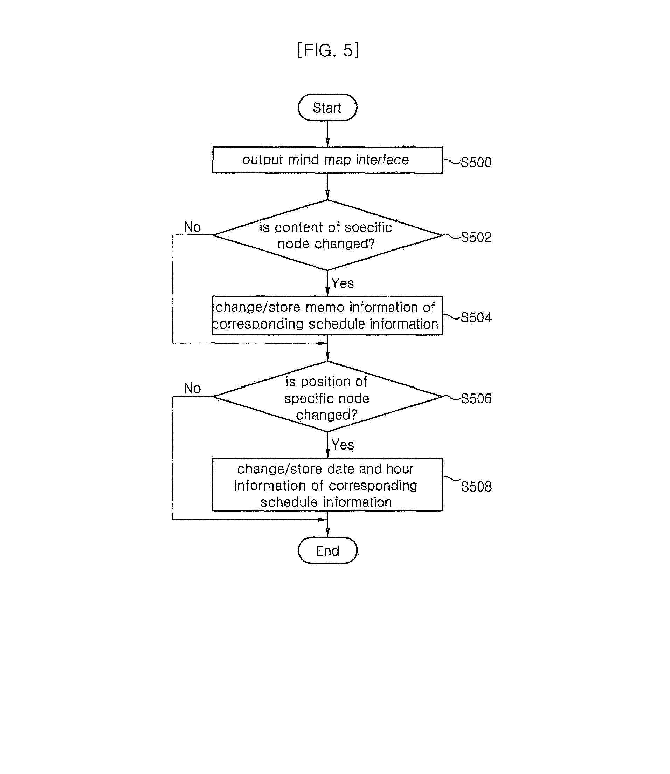

FIG. 5 is a flow chart showing a process of associating schedule information and a mind map with each other performed by the electronic diary device in the case in which the mind map is changed according to an exemplary embodiment of the present invention. Hereinafter, a process of associating a specific node and an electronic diary with each other in the case in which association between the specific node on the mind map and the electronic diary is newly requested according to an exemplary embodiment of the present invention will be described with reference to FIGS. 5, 6 and 7. For the purpose of illustration, it is assumed that a situation is similar to the situation as described above and the date and hour information is set as the first level node.

When the mind map is invoked depending on a manipulation of the user (for example, a click (touch) of the mind map icon, a click (touch) of a mind map editor icon, or the like, as described above) after the electronic diary application 110 is executed, the mind map managing unit 130 outputs the mind map interface showing the mind map selected by the user (S500).

The mind map managing unit 130 decides whether or not a content of a specific node is changed depending on the manipulation of the user with respect to the mind map on the mind map interface output through a screen (S502). In the case in which the content of the specific node (that is, the content of the specific node output through the screen) is changed depending on the manipulation of the user, the mind map managing unit 130 controls the diary managing unit 120 to change a content of schedule information corresponding to the corresponding node (S504). For example, in an example of FIG. 7, in the case in which a content of the memo information node 1 720a, which is the child node of the date and hour information node 1 710a, is changed from the memo 1 to a memo 1', the mind map managing unit 130 controls the diary managing unit 120 to change the memo information of the schedule information corresponding to the corresponding node (that is, the schedule information including the memo 1 of FIG. 6) from the memo 1 into the memo 1'. Although the case in which the memo information is changed has been described in FIG. 5, the above-mentioned process is similarly applied to the case in which the detailed information is changed. Meanwhile, in the example of FIG. 7, in the case in which the memo information node 1 720a, which is the child node of the date and hour information node 1 710a, is deleted, the mind map managing unit 130 controls the diary managing unit 120 to delete the schedule information corresponding to the corresponding node (that is, the schedule information including the memo 1 of FIG. 6). Meanwhile, as described above, the lower level node (for example, the child node, the grandchild node, or the like) shares its fate with the upper level node (for example, the parent node), while the upper level node does not share its fate with the lower level node. That is, in the case in which a specific node is deleted, lower level nodes (a child node, a grandchild node, and the like) of the specific node are deleted together with the specific node, but an upper level node (nodes) (a parent node (nodes), a grandparent node (nodes), and the like) of the specific node are not deleted. This is similarly applied to the case in which a position of the specific node is changed from an original position (having an original connection relationship) to another position (having another connection relationship) depending on a manipulation of the user. Through the above-mentioned process, in the case in which the content of the specific node on the mind map is changed, the associated schedule information may be changed so as to correspond to the changed content.

In addition, the mind map managing unit 130 according to an exemplary embodiment of the present invention decides whether or not a position of the specific node is changed depending on a manipulation of the user (S506). As described above, in the case in which the position of the specific node within the mind map is changed, a position of the lower level node (nodes) of the specific node is also changed. In addition, as described above, since the lower level node inherits an attribute of the upper level node, the meaning that the position of the specific node is changed is that the inherited content is changed. Therefore, in the case in which the position of the specific node is changed depending on a manipulation of the user, the mind map managing unit 130 changes a content of the upper level node inherited by the corresponding specific node depending on the changed position and changes a content of the corresponding schedule information for an electronic diary depending on the changed content (S508). In more detail, for example, in the example of FIG. 7, in the case in which a position of the memo information node 2 720b, which is the child node of the date and hour information node 1 710a, is moved depending on the manipulation of the user to thereby be changed into a child node having the date and hour information node 2 710b as a parent node, the date and hour information of the schedule information for an electronic diary including the content (that is, the memo 2) of the memo information node 2 720b is changed from the date and hour information 1 into the date and hour information 2. Here, since the schedule information including the memo 2 also includes the time information, after the position of the memo information node 2 720b is changed, the mind map managing unit 130 may provide a separate window through which the time information may be input to the user. In this case, when the time information is input, the memo 2 is displayed in a time schedule blank input on the electronic diary interface 600, and when the time information is not input, the memo 2 is displayed on a lower end of a Tuesday schedule blank (that is, a portion in which a schedule of which time information is not present is displayed) on the electronic diary interface 600. Although an example in which the position of the memo information node (or the memo information node+the detailed information node), which is the lower level node having the upper level node as the date and hour information node, is changed has been described with reference to FIG. 5, it will be obvious to those skilled in the art that the present invention is not limited thereto. That is, for example, in the example of FIG. 7, in the case in which a position of the detailed information node 1 730a having the date and hour information node 1 710a as a grandparent node is changed into a child node of the memo information node 720c having the date and hour information node 2 710b as a parent node depending on a manipulation of the user, the detailed information 1 in the schedule information corresponding to the memo information node 3 720c having the date and hour information node 1 710a as a parent node is deleted, and the detailed information 1 is added to the schedule information corresponding to the memo information node 3 720c having the date and hour information node 2 710b as a parent node. Therefore, subsequently, the electronic diary interface 600 displays only 'memo 3' instead of 'memo 3-detailed information 1' in a Monday schedule information blank of FIG. 6 and displays 'memo 3-detailed information 1, detailed information 2' instead of 'memo 3-detailed information 2' in a Tuesday schedule information blank.

Meanwhile, a position of a node (for example, the second level node) requiring the upper level node may be changed into a level node (for example, the first level node) higher than a current node level depending on a manipulation of the user. In this case, as described above, the lower level node should inherit a content of the upper level node in principle. However, since the content of the upper level node inherited before movement is not present in a current moved position, the mind map managing unit 130 may be configured to provide an input window through which the content of the upper level node may be input and store the content input through the input window as the content of the upper level node of the corresponding node. For example, in the example shown in FIG. 7, in the case in which a position of the memo information node 2 720b that has been positioned so as to have the date and hour information node 1 710a as an upper level node is changed into a first level node directly branched from the center node 700 depending on a manipulation of the user, the date and hour information that should be inherited by the memo information 2 displayed in the memo information node 2 is not currently present. Therefore, in this case, the mind map managing unit 130 may be configured to provide an input window through which the date and hour information, which is a content of the upper level node for the memo information 2, may be input and store the date and hour information input through the input window as the date and hour information for the memo information 2 to update the schedule information for an electronic diary.

In the scheme as described above, the electronic diary device 100 according to an exemplary embodiment of the present invention may reflect the changed data in the schedule information of the electronic diary in the case in which the content of the specific node associated with the schedule information of the electronic diary within the specific mind map is changed or the position of the specific node within the mind map is changed.

### Implementation of Electronic Diary Associated with Mind Map

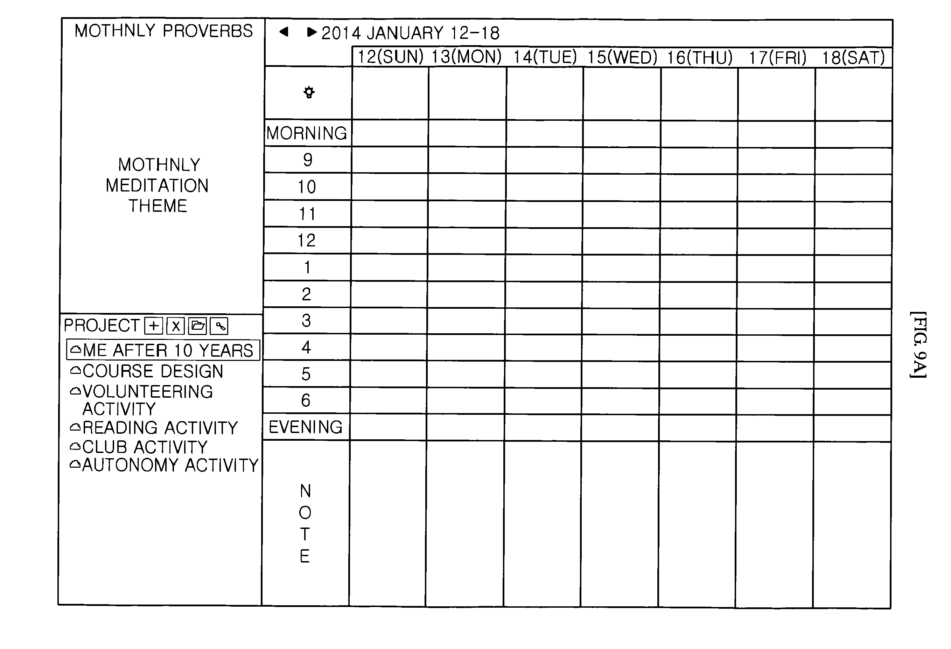

FIGS. 9A to 9I are illustrative diagrams of electronic diaries associated with the mind map actually implemented by the electronic diary device according to an exemplary embodiment of the present invention. Hereinafter, detailed examples of an electronic diary according to an exemplary embodiment of the present invention will be generally described with reference to FIGS. 9A to 9I.

First, FIG. 9A shows an electronic diary interface operated in a weekly mode provided by the electronic diary device 100, FIG. 9B shows an electronic diary interface operated in a monthly mode provided by the electronic diary device 100, and FIG. 9C shows an electronic diary interface operated in an annual mode provided by the electronic diary device 100. As shown, the user of the electronic diary device 100 may select a weekly mode icon, a monthly mode icon, or an annual mode icon output on an upper end of the electronic diary interface to select the electronic diary interface output in the corresponding mode, thereby utilizing an electronic diary function.

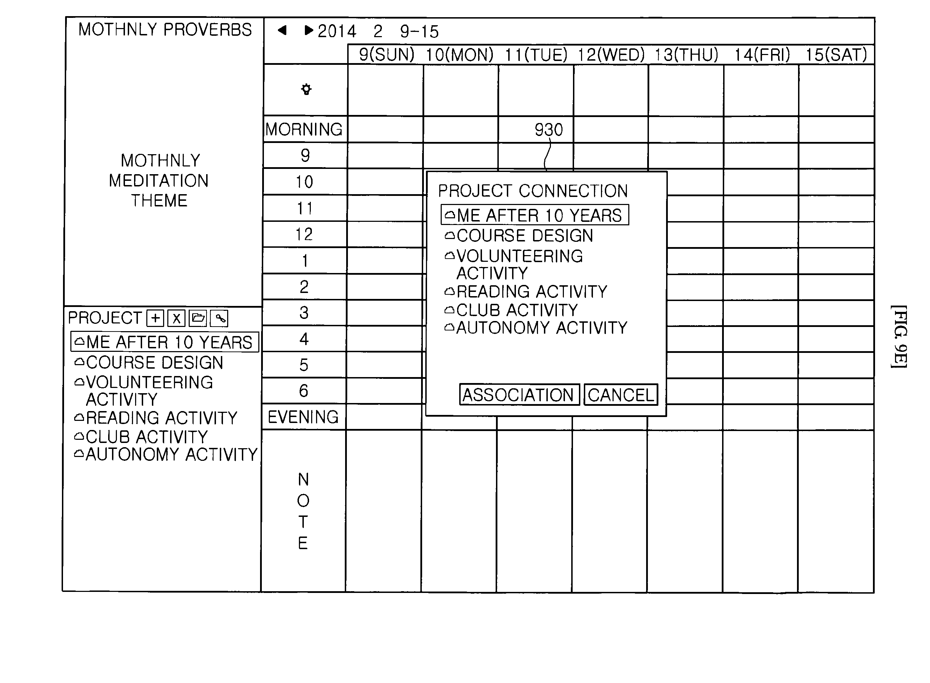

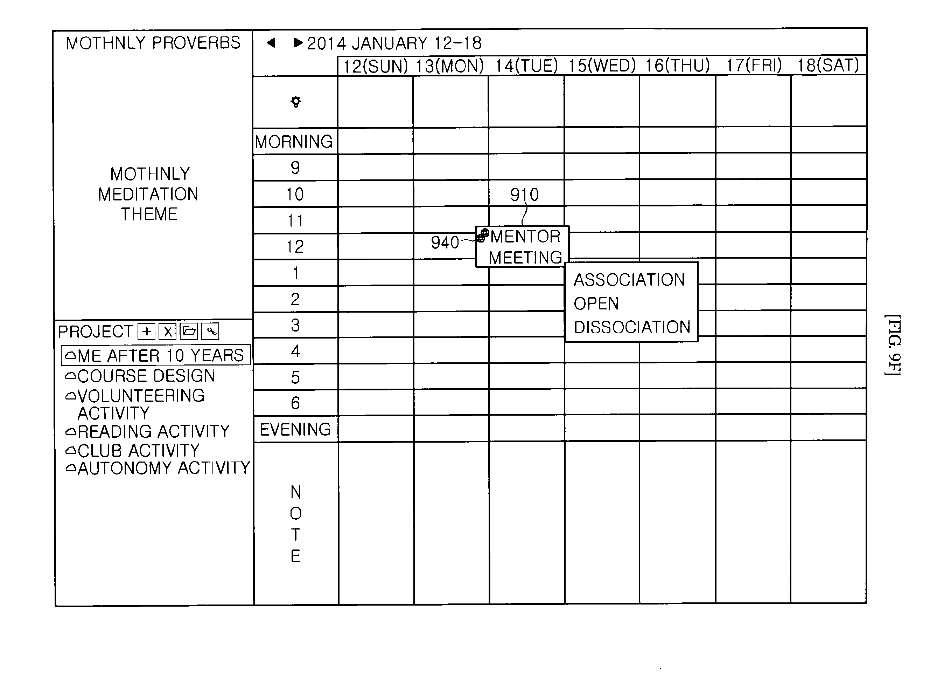

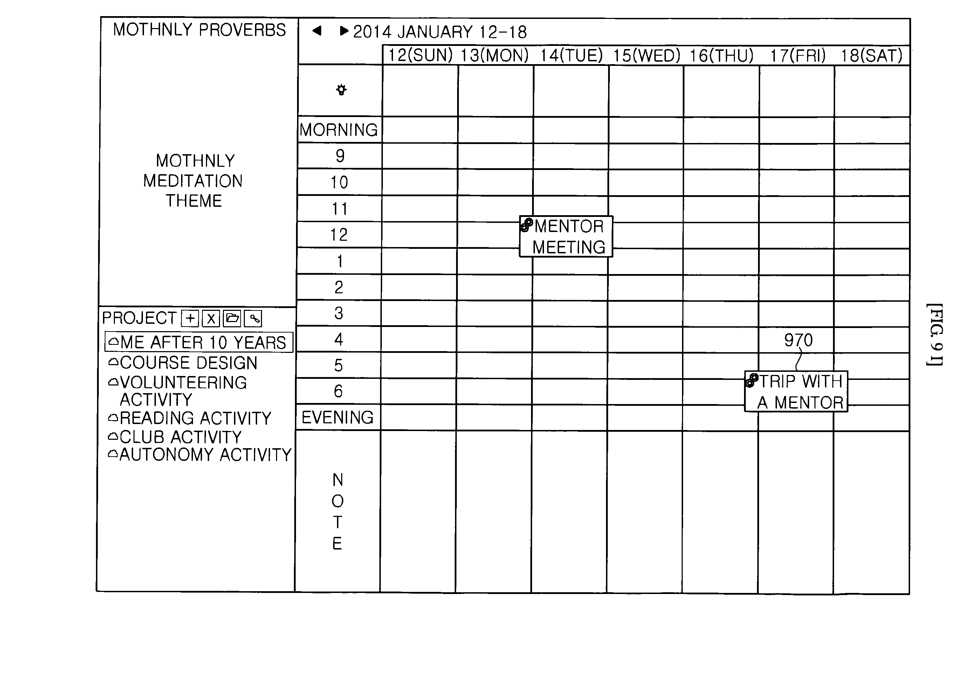

Meanwhile, a 'project' region displayed on a lower end at the left of FIGS. 9A to 9C displays names of all projects (that is, mind maps) currently associated with at least one of schedule information. Therefore, in an example shown in FIG. 9, mind maps currently associated with schedule information of the user are six mind maps including "me after 10 years', 'course design', 'volunteering activity', 'reading activity', 'club activity', and 'autonomy activity'. The user may select one of a plurality of mind map names displayed on the project region to invoke the selected mind map and output the invoked mind map through the mind map interface. In addition, the user may newly add a specific mind map using a mind map adding icon (icon denoted by '+') displayed on the project region and release current association between the schedule information and the mind map using a mind map deleting icon (icon denoted by 'x').

FIG. 9D shows an illustrative screen on which the user newly inputs schedule information through the electronic diary interface in the weekly mode shown in FIG. 9A. When the user selects (user's action such as a touch, a click, a double click, or the like) a specific position in order to newly input the schedule information on the electronic diary interface, the electronic diary device 100 provides a schedule information display window 920 through which user's schedule information may be input, confirmed, and modified to the user. As shown, in an exemplary embodiment, the schedule information display window 920 may include a memo input blank in which a memo (title) of the schedule information may be input, a start time input blank in which a start time of the schedule information may be input, an end time input blank in which an end time of the schedule information may be input, a project selection blank in which an associated mind map may be selected, and a detailed information input blank in which a detailed content of the schedule information may be input. The information input in the memo input blank may be used as the memo information as described above, and the information input in the detailed information input blank may be used as the detailed information as described above. That is, although the memo information and the detailed information configuring the schedule information are configured to be divided from each other using the preset divider in the case of an exemplary embodiment described with reference to FIG. 6, the memo information and the detailed information are divided from each other and processed through the memo input blank in which the memo information may be input and the detailed information input blank in which the detailed information may be input in the schedule information display window 920 itself through which the schedule information may be input in the case of an exemplary embodiment described with reference to FIG. 9.

In addition, the time information input in the start time input blank and the end time input blank may be used as the date and hour information as described above. It may be confirmed in FIG. 9D that schedule information 910 corresponding to the schedule information display window 920 that is currently output is output on the electronic diary interface. In another exemplary embodiment, a configuration in which only the title input in the title input blank is displayed on the electronic diary interface, and the schedule information display window 920 is again output on the electronic diary interface when the user selects the corresponding schedule information, thereby allowing the user to confirm the detailed content for the corresponding schedule information is also possible. In addition, in another exemplary embodiment, both of the memo information input in the memo input blank and the detailed information input in the detailed information input blank may also be configured to be displayed on the electronic diary interface.

FIG. 9E shows an illustrative screen on which the mind map is selected in the case in which association between the schedule information newly input through the electronic diary interface shown in FIG. 9D and the mind map is requested by the user. In the case in which the user selects the project selection blank on the schedule information display window 920 shown in FIG. 9D, all of the mind maps that are currently registered are listed in a project connection window 930, as shown in FIG. 9E, and the user selects the mind map that he/she wants to be associated with the input schedule information among the mind maps listed in the project connection window 930, thereby making it possible to associate the corresponding schedule information with the selected mind map. As described above, another mind map that is not registered (that is, is not currently connected with the schedule information) may be added, and the input schedule information may be associated with the added mind map.

FIG. 9F shows an illustrative screen on which the schedule information newly input through the processes of FIGS. 9D and 9E and associated with the mind map is displayed on the electronic diary interface. Therefore, as shown in FIG. 9F, memo information ('mentor meeting') input through the schedule information display window 920 is displayed as the schedule information 910 on the electronic diary interface, and a mark indicating that the corresponding schedule information 910 has been associated with the specific mind map is output as a mind map icon 940 displayed on an upper end of the left of the schedule information 910.

FIG. 9G shows an illustrative screen on which a mind map including the schedule information newly input through the processes of FIG. 9D and 9F and associated with the mind map is invoked and output. The screen shown in FIG. 9G is a screen on which a mind map having a name 'course design' is invoked and output after the schedule information 910 is associated with the mind map having the name 'course design' in FIG. 9F. In the case in which the user selects a name of a specific mind map listed in the project region on the electronic diary interface or selects specific schedule information associated with the specific mind map on the electronic diary interface, the specific mind map may be invoked and output through the mind map interface.

As shown in FIG. 9G, it needs to be noted that the mind map having the name 'course design' includes various information other than the schedule information as a plurality of nodes. That is, the schedule information 910 may be added as one node of the 'course design' mind map in which various information is structuralized and stored as the nodes. Therefore, various information including the schedule information and related to a subject of the corresponding mind map may be visually structuralized and provided to the user. In addition, it will be obvious to those skilled in the art that nodes of other information unrelated to the schedule information may be input, modified, and deleted as needed on the mind map interface.

Meanwhile, as described above, the electronic diary device 100 according to an exemplary embodiment of the present invention may add the schedule information requested to be associated with the mind map to the corresponding mind map in one of various schemes. This will be briefly summarized as follows.
I. First exemplary embodiments of scheme in which schedule information is added - in the case in which setting of parent node is not present
I-1) Scheme in which the entirety or a portion of schedule information is added as a first level node to a mind map: This scheme, which is the most basic addition scheme, is a scheme in which when association between schedule information and a mind map is first requested, the entirety of the schedule information or a portion (memo information, memo information+date and hour information (or a portion of date and hour information), memo information+detailed information, memo information+detailed information+a portion of date and hour information, or the like) of the schedule information is added and output as the first level node of the corresponding mind map. It will be obvious to those skilled in the art that a position, a content, and the like, of a node corresponding to the corresponding schedule information may be changed on the mind map interface after the corresponding schedule information is added.

In addition, there may be various modified examples for the scheme in which the schedule information is added. As described above, 1-2) the electronic diary device 100 according to an exemplary embodiment of the present invention may add the date and hour information (or a portion of the date and hour information) in the schedule information as the first level node to the corresponding mind map and add the memo information in the schedule information as a second level node having the corresponding date and hour information as a parent node to the corresponding mind map. Alternatively, 1-3) the electronic diary device 100 according to an exemplary embodiment of the present invention may add the memo information in the schedule information as the first level node to the corresponding mind map and add the date and hour information (or a portion of the date and hour information) in the schedule information as the second level node having the corresponding memo information as a parent node to the corresponding mind map. Alternatively, I-4) the electronic diary device 100 according to an exemplary embodiment of the present invention may add the date and hour information (or a portion of the date and hour information) in the schedule information as the first level node, the memo information in the schedule information as the second level node having the corresponding date and hour information as a parent node, and the detailed information in the schedule information as a third level node having the corresponding memo information as a parent node, to the corresponding mind map. Alternatively, I-5) the electronic diary device 100 according to an exemplary embodiment of the present invention may add the memo information in the schedule information as the first level node, the date and hour information (or a portion of the date and hour information) in the schedule information as the second level node having the corresponding memo information as a parent node, and the detailed information in the schedule information as the third level node having the corresponding date and hour information as a parent node, to the corresponding mind map.
II. Second exemplary embodiments of scheme in which schedule information is added - in the case in which setting of parent node is present
II-1) Scheme in which the entirety or a portion of schedule information is added as a child node of an n-th level node (n indicates a positive integer of 1 or more) to a mind map: This scheme is a scheme in which when association between schedule information and a mind map is first requested, the entirety of the schedule information or a portion of the schedule information is added and output as a child node of a specific node set as a parent node of a schedule information node. In this case, the schedule information node is newly added as an n+1-th level node having the n-th level node as a parent node to the mind map. Likewise, a position, a content, and the like, of a node corresponding to the corresponding schedule information may be changed on the mind map interface after the corresponding schedule information is added. In this case, the user may set and change a parent node in the schedule information is to be basically added through the mind map interface. For example, the user may create a first level node called a 'schedule information list' on the mind map and set the node called the 'schedule information list' as a parent node for schedule information that is to be added later. In the case in which an exemplary embodiment is implemented in this scheme, all schedule information subsequently associated to the corresponding mind map may be added as a second level node having the node called the 'schedule information list' as a parent node to the corresponding mind map.

In addition, there may be various modified examples for the scheme in which the schedule information is added. As described above, II-2) the electronic diary device 100 according to an exemplary embodiment of the present invention may add the date and hour information (or a portion of the date and hour information) in the schedule information as the n+1-th level node, which is a child node of the preset n-th level node as described above, to the corresponding mind map and add the memo information in the schedule information as an n+2-th level node having the corresponding date and hour information as a parent node to the corresponding mind map. Alternatively, II-3) the electronic diary device 100 according to an exemplary embodiment of the present invention may add the memo information in the schedule information as the n+1-th level node, which is a child node of the preset n-th level node, to the corresponding mind map and add the date and hour information (or a portion of the date and hour information) in the schedule information as the n+2-th level node having the corresponding memo information as a parent node to the corresponding mind map. Alternatively, II-4) the electronic diary device 100 according to an exemplary embodiment of the present invention may add the date and hour information (or a portion of the date and hour information) in the schedule information as the n+1-th level node, which is a child node of the preset n-th level node, the memo information in the schedule information as the n+2-th level node having the corresponding date and hour information as a parent node, and the detailed information in the schedule information as an n+3-th level node having the corresponding memo information as a parent node, to the corresponding mind map. Alternatively, II-5) the electronic diary device 100 according to an exemplary embodiment of the present invention may add the memo information in the schedule information as the n+1-th level node, which is a child node of the preset n-th level node, the date and hour information (or a portion of the date and hour information) in the schedule information as the n+2-th level node having the corresponding memo information as a parent node, and the detailed information in the schedule information as the n+3-th level node having the corresponding date and hour information as a parent node, to the corresponding mind map.

In addition to the schemes as described above, various schemes may be used in order to add the schedule information to the mind map. However, it is to be understood that even though any scheme of adding schedule information is adopted, it falls within the scope of the present invention as long as the technical gist of the present invention, that is, the technical spirit of the present invention that the schedule information input on the electronic diary interface is added to the mind map that becomes an association target is included as it is in spite of various modifications and alterations.

Meanwhile, the electronic diary device 100 according to an exemplary embodiment of the present invention may be configured to support all or some of various schemes of adding schedule information, and may be operated so as to add the schedule information to the mind map in a specific scheme depending on a selection of the user in the case in which it is configured to support several schemes of adding schedule information.

In an example shown in FIG. 9, 'mentoring' is set so that the memo information in the schedule information is added as the second level node having the first level node as a parent node. Therefore, it may be confirmed that the schedule information 910 newly input through FIGS. 9D to 9F and associated with the mind map called the 'course design' is added as a new schedule information node 950 of the second level node having a node called the 'mentoring' as a parent node to the mind map called the 'course design', as shown in FIG. 9G. In the case in which the associated schedule information is displayed as a schedule information node on the mind map, a mark indicating a node associated with the schedule information may be added to the corresponding node. In FIG. 9G, an icon 955 having, for example, a clock shape is added to the schedule information node 950 to represent that the corresponding node is the schedule information node associated with the schedule information.

Meanwhile, in the case in which the user selects the schedule information node associated with the schedule information (that is, marked with the icon 955 having the clock shape) on the mind map, a schedule information display window (not shown) similar to the schedule information display window 920 shown in FIG. 9D may be output to display a detailed content of the schedule information associated with the corresponding schedule information node. In addition, in the case in which the user selects the corresponding schedule information node and modify or change a content of the output or displayed schedule information display window (not shown), the schedule information associated with the corresponding schedule information node is also stored depending on the content modified or changed through the schedule information display window on the mind map.

FIG. 9H shows an illustrative screen on which a node is newly added on the mind map interface shown in FIG. 9G and the added node is added as the schedule information to the electronic diary. The user may add a child node of the 'mentoring' node on the mind map interface as shown in FIG. 9G, and input 'trip with a mentor' as a content of the corresponding node, and then add the corresponding node as the schedule information to the electronic diary. In the case in which the user wants to add a content of a specific node as the schedule information to the electronic diary (for example, in the case in which the user selects a specific icon for performing the corresponding function, or the like), a schedule information display window (not shown) similar to the schedule information display window 920 shown in FIG. 9D is output, the user inputs various information (for example, start time, end time, detailed information, and the like) for setting the corresponding node as the schedule information through the corresponding schedule information display window, and the schedule information may be created based on the input content and be added as the schedule information of the electronic diary to the electronic diary. In the case in which the specific node is added as the schedule information to the electronic diary through the above-mentioned process, an icon having a clock shape is added to the corresponding node 960, as shown in FIG. 9H.

FIG. 9I shows an illustrative screen showing an electronic diary interface after the specific node 960 is added as the schedule information to the electronic diary through FIG. 9H. As shown in FIG. 9I, it may be confirmed that (the entirety or a portion of) a content of the specific node 960 added as the schedule information is displayed as schedule information 970 on the electronic diary interface.

### Cooperation System Using Electronic Diary Device

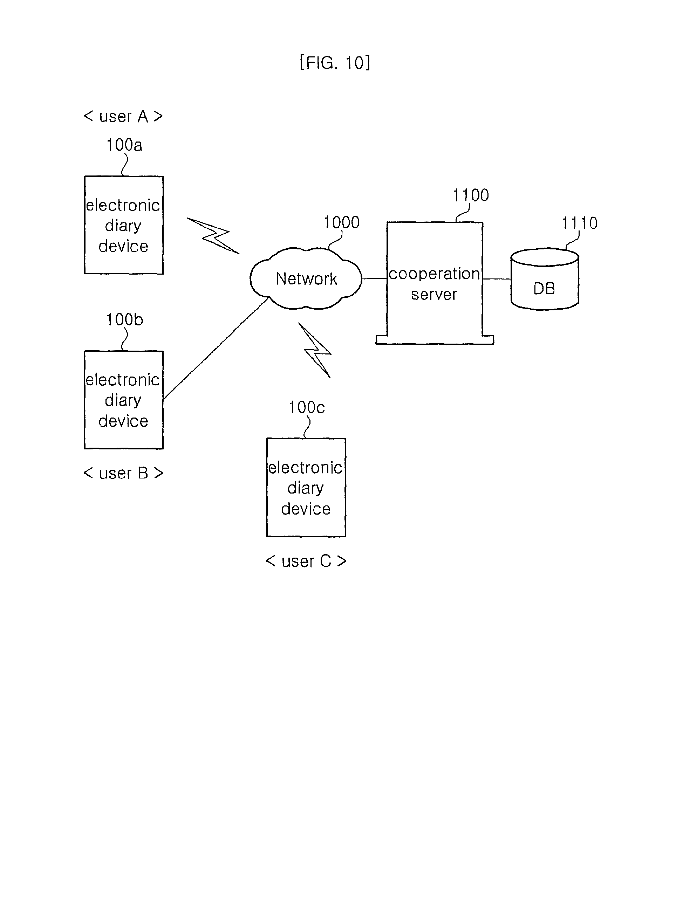

FIG. 10 is a block diagram showing a configuration of a cooperation system using the electronic diary device according to an exemplary embodiment of the present invention. Hereinafter, the cooperation system using the electronic diary device according to an exemplary embodiment of the present invention will be described with reference to FIG. 10.

As shown in FIG. 10, the cooperation system according to an exemplary embodiment of the present invention may include a plurality of electronic diary devices 100a to 100c, a network 1000, and a cooperation server 1100.

First, the cooperation system according to an exemplary embodiment of the present invention may provide a cooperation function through mind map and schedule sharing between a plurality of users using the plurality of electronic diary devices and the cooperation server 1100.

This will be described in more detail on the assumption that a user A of the electronic diary device 100a shares a mind map A for a project A through the cooperation server 1100. First, the user A registers the mind map A to be jointly performed using the electronic diary device 100a in the cooperation server 1100 or creates and registers the mind map A on the cooperation server 1100 and waits for registration of other users that are to participate in the project A. In this case, the registration of other users may be made in a scheme in which the user A sets a predetermined condition (for example, a user ID, or the like) with respect to other users that are to participate in the project A or determines whether or not other users requesting the registration participate in the project A.

Through the process as described above, it is assumed that a user B of the electronic diary device 100b and a user C of the electronic diary device 100c participate as co-workers in the project A with respect to the mind map A created by the user A. When this relationship is set, in the case in which a change (addition, deletion, movement, content change of a node, or the like) occurs with respect to the mind map A depending on manipulations of the respective users on the electronic diary devices of the users, change information is transmitted to the cooperation server 1100 and is then transmitted to the electronic diary devices of other users, such that the mind map A is shared. For example, in the case in which the user A adds a new node to the mind map A using the electronic diary device 100a, this change information is transmitted to the cooperation server 1100, and the cooperation server 1100 transmits the received change information to the electronic diary devices 100b and 100c of the users B and C registered as the co-workers with respect to the mind map A.

Meanwhile, in addition to the cooperation function for the mind map, the cooperation system according to an exemplary embodiment of the present invention may allow the schedule information as described above to be shared between the co-workers. For example, in the case in which the user A adds schedule information a to his/her diary and associates the added schedule information a with the mind map A that is co-working (or in the case in which the user A adds a node to the mind map A and associates the added node as the schedule information to his/her electronic diary), the electronic diary device 100a transmits this change information to the cooperation server 1100, and the cooperation server 1100 transmits the received change information to the electronic diary devices 100b and 100c of the users B and C registered as the co-workers with respect to the mind map A. The electronic diary devices 100b and 100c of the users B and C receiving the change information from the cooperation server 1100 update the stored mind map A depending on the change information and recognize that the corresponding change information has been associated with the schedule information to store the change content as the schedule information on the electronic diaries of the respective users. Therefore, the schedule information a that the user A adds as his/her schedule information is displayed on each of the electronic diary interfaces of the electronic diary devices 100b and 100c of the users B and C, such that the schedule information for the project A may also be shared.

Exemplary embodiments of the present invention may be implemented in a form of program commands that may be executed through various computer means and may be recorded in a computer-readable recording medium. The computer-readable recording medium may include a program command, a data file, a data structure or the like, alone or a combination thereof. The program commands recorded in the computer-readable recording medium may be especially designed and constituted for the present invention or be known to those skilled in a field of computer software. Examples of the computer-readable recording medium may include a magnetic medium such as a hard disk, a floppy disk, or a magnetic tape; an optical recording medium such as a compact disk read only memory (CD-ROM) or a digital versatile disk (DVD); a magneto-optical medium such as a floptical disk; and a hardware device specially configured to store and perform program commands, such as a ROM, a random access memory (RAM), a flash memory, or the like. Examples of the program commands may include a high-level language code capable of being executed by a computer using an interpreter, or the like, as well as a machine language code made by a compiler. The above-mentioned hardware device may be constituted to be operated as at least one software module in order to perform an operation according to the present invention, and vice versa.

As set forth above, according to exemplary embodiments of the present invention, a plurality of schedule information having a meaningful relationship may be visually structuralized and provided to the user.

In addition, according to exemplary embodiments of the present invention, in the case in which the node is created, the content of the node is changed, or the position of the node is changed on the mind map associated with the electronic diary, this generated or changed data may be reflected in the schedule information of the electronic diary in real time.

Further, according to exemplary embodiments of the present invention, the mind map may be reconfigured and output based on the specific node depending on the selection of the user on the mind map.

Hereinabove, although the present invention has been described by specific matters such as detailed components, exemplary embodiments, and the accompanying drawings, they have been provided only for assisting in the entire understanding of the present invention. Therefore, the present invention is not limited to the exemplary embodiments. Various modifications and changes may be made by those skilled in the art to which the present invention pertains from this description.

Therefore, the spirit of the present invention should not be limited to these exemplary embodiments, but the claims and all of modifications equal or equivalent to the claims are intended to fall within the scope and spirit of the invention.

## Claims

1. A method for associating schedule information of an electronic diary with a mind map performed by an electronic diary device, comprising:
(a) a step of providing an electronic diary interface displaying the schedule information; and
(b) a step of associating the schedule information with the mind map in the case in which association between the schedule information displayed on the electronic diary interface and the mind map is requested.

2. The method for associating schedule information of an electronic diary with a mind map of claim 1, wherein in the step (b), in the case in which creation of a new mind map with respect to the schedule information is requested, the new mind map having the schedule information as a center node is created.

3. The method for associating schedule information of an electronic diary with a mind map of claim 1, wherein in the step (b), in the case in which association between the schedule information and an existing mind map is requested, the schedule information is added to a specific node of the existing mind map.

4. The method for associating schedule information of an electronic diary with a mind map of claim 3, wherein the schedule information includes date and hour information and memo information.

5. The method for associating schedule information of an electronic diary with a mind map of claim 4, wherein in the step (b), the schedule information is added as a first level schedule information node to the existing mind map.

6. The method for associating schedule information of an electronic diary with a mind map of claim 3, wherein in the step (b), in the case in which a plurality of existing mind maps are present, information on the plurality of existing mind maps is output, and the schedule information is added to a specific existing mind map selected depending on a selection of a user.

7. The method for associating schedule information of an electronic diary with a mind map of claim 1, further comprising:
(c) a step of outputting a specific mind map related to the schedule information on a mind map interface; and
(d) a step of changing the schedule information related to a changed content and displaying the changed schedule information on the electronic diary interface, in the case in which a content of the specific mind map is changed through the mind map interface depending on a manipulation of a user.

8. A method for associating schedule information of an electronic diary with a mind map performed by an electronic diary device, comprising:
(e) a step of providing a mind map interface displaying a mind map; and
(f) in the case in which association between a specific node among nodes on the mind map and the schedule information is requested depending on a manipulation of the user, a content of the specific node requested to be associated is created and stored as the schedule information of the electronic diary.

9. The method for associating schedule information of an electronic diary with a mind map of claim 8, wherein in the step (f), in the case in which the specific node requested to be associated with the schedule information is a second level node, the specific node inherits a content of a first level node, which is a parent node, and in the case in which the specific node requested to be associated with the schedule information is a third level node, the specific node inherits a content of the first level node, which is a grandparent node, and a content of the second level node, which is a parent node.

10. The method for associating schedule information of an electronic diary with a mind map of claim 8, wherein in the step (f), in the case in which the specific node requested to be associated with the schedule information does not include date and hour information, a date and hour information input window through which the date and hour information is input is provided, and the schedule information of the electronic diary is created based on the date and hour information input through the date and hour information input window.

11. The method for associating schedule information of an electronic diary with a mind map of claim 8, wherein in the step (c), in the case in which a specific node associated with the schedule information on the mind map is deleted depending on a manipulation of the user, schedule information corresponding to the deleted specific node is deleted.

12. The method for associating schedule information of an electronic diary with a mind map of claim 8, wherein in the step (f), in the case in which a content of a specific node associated with the schedule information on the mind map is changed depending on a manipulation of the user, schedule information corresponding to the changed specific node is updated depending on the changed content.

13. The method for associating schedule information of an electronic diary with a mind map of claim 8, wherein in the step (c), in the case in which a position of a specific node associated with the schedule information on the mind map is changed depending on a manipulation of the user, schedule information corresponding to the changed specific node is updated depending on the changed position of the specific node.

14. A computer-readable recording medium having a program for performing the method for associating schedule information of an electronic diary with a mind map of any one of claims 1 to 13 recorded therein.

15. A server for providing a program for performing the method for associating schedule information of an electronic diary with a mind map of any one of claims 1 to 13 to a user terminal.
